(19) Europäisches Patentamt
European Patent Office
Office européen des brevets

(11) **EP 4 112 661 A1**

(12) **EUROPEAN PATENT APPLICATION**
published in accordance with Art. 153(4) EPC

(43) Date of publication:
04.01.2023 Bulletin 2023/01

(21) Application number: 21760447.9

(22) Date of filing: 03.02.2021

(51) International Patent Classification (IPC):
*C08F 265/04* (2006.01)   *H01M 4/13* (2010.01)
*H01M 4/62* (2006.01)   *H01M 50/409* (2021.01)

(52) Cooperative Patent Classification (CPC):
**C08F 265/04; H01M 4/13; H01M 4/62;**
**H01M 50/409;** Y02E 60/10; Y02P 70/50

(86) International application number:
**PCT/JP2021/003996**

(87) International publication number:
**WO 2021/171942 (02.09.2021 Gazette 2021/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.02.2020 JP 2020034157**

(71) Applicant: **Zeon Corporation
Tokyo 100-8246 (JP)**

(72) Inventor: **ADACHI Yusuke
Tokyo 100-8246 (JP)**

(74) Representative: **Hansen, Norbert
Maiwald GmbH
Elisenhof
Elisenstraße 3
80335 München (DE)**

(54) **BINDER COMPOSITION FOR SECONDARY BATTERIES, SLURRY COMPOSITION FOR SECONDARY BATTERIES, FUNCTIONAL LAYER FOR SECONDARY BATTERIES, SEPARATOR FOR SECONDARY BATTERIES, ELECTRODE FOR SECONDARY BATTERIES, AND SECONDARY BATTERY**

(57) Provided is a binder composition for a secondary battery with which excellent close adherence is obtained between a substrate and a layer obtained using the binder composition and that can result in a secondary battery having good cycle characteristics. The binder composition contains a polymer and a solvent, wherein the polymer is core-shell particles including a core portion formed of a polymer (a1) and a shell portion formed of a polymer (a2). The polymer (a2) includes specific monomer units with specific amounts, wherein at least one type of monomer unit selected from a monofunctional unsaturated carboxylic acid monomer unit and a monofunctional unsaturated sulfonic acid monomer unit is not less than 0.1 mol and not more than 15,000 mol relative to 1 mol of a monomer unit of a monomer including at least two vinyl functional groups.

## Description

### TECHNICAL FIELD

The present disclosure relates to a binder composition for a secondary battery, a slurry composition for a secondary battery, a functional layer for a secondary battery, a separator for a secondary battery, an electrode for a secondary battery, and a secondary battery.

### BACKGROUND

Lithium ion secondary batteries and other such non-aqueous secondary batteries have characteristics such as compact size, light weight, high energy-density, and the ability to be repeatedly charged and discharged, and are used in a wide variety of applications. A secondary battery generally includes battery members such as electrodes (positive electrode and negative electrode) and a separator that isolates the positive electrode and the negative electrode from each other and prevents short circuiting between the positive and negative electrodes.

A separator of a secondary battery may typically be a separator that includes an adhesive layer containing a binder or a porous membrane layer containing a binder and non-conductive particles as functional particles on a separator substrate. Moreover, an electrode of a secondary battery may be an electrode that includes an electrode mixed material layer containing a binder and electrode active material particles as functional particles on a current collector or an electrode that further includes an adhesive layer or porous membrane layer such as described above on an electrode substrate that includes an electrode mixed material layer on a current collector.

Attempts have been made to improve binder-containing binder compositions with the aim of achieving further improvement of secondary battery performance, and a technique for improving close adherence through the use of a binder formed of core-shell particles has been proposed.

### CITATION LIST

Patent Literature

PTL 1: WO2016/039067A1
PTL 2: JP2015-201444A
PTL 3: JP2006-513554A
PTL 4: JP2013-073921A
PTL 5: JP-H6-302797A
PTL 6: WO2017/110901A1
PTL 7: WO2017/188055A1
PTL 8: WO2018/043200A1
PTL 9: JP-H11-025989A
PTL 10: JP2013-182765A

### SUMMARY

(Technical Problem)

However, in the conventional technique described above, there has been a problem that a binder formed of core-shell particles has a high tendency to move to the surface of a layer during production of each of the layers described above. This phenomenon is referred to as migration. The occurrence of migration causes the binder to concentrate in proximity to the surface while, conversely, being present in a smaller amount in proximity to an interface with a substrate, which reduces close adherence of the substrate and the layer and may cause deterioration of battery performance, and particularly cycle characteristics of a secondary battery.

Moreover, lithium ion secondary batteries are known to experience a problem particular thereto of lithium metal deposition associated with repeated charge/discharge cycling. Deposition of lithium metal on a negative electrode during charging and discharging may act as a cause of short circuiting, and thus strict restriction of lithium metal deposition is desirable in terms of improving safety and reliability.

An object of the present disclosure is to provide a binder composition containing core-shell particles with which excellent close adherence is obtained between a substrate and a layer obtained using the binder composition in production of a separator, electrode, or the like of a secondary battery and that can result in a secondary battery having good cycle characteristics.

(Solution to Problem)

The inventor conducted diligent studies focusing on inhibiting binder migration with the aim of solving the problem set forth above, and thereby completed the present disclosure.

Specifically, the present disclosure aims to advantageously solve the problem set forth above, and a presently disclosed binder composition for a secondary battery comprises a polymer and a solvent, wherein

the polymer is core-shell particles including a core portion formed of a polymer (a1) and a shell portion formed of a polymer (a2),
the polymer (a2) includes: not less than 50.0 mass% and not more than 89.9 mass% of a monofunctional unsaturated carboxylic acid ester monomer unit; not less than 10.0 mass% and not more than 49.9 mass% of at least one type of monomer unit selected from a monofunctional unsaturated carboxylic acid monomer unit and a monofunctional unsaturated sulfonic acid monomer unit; not less than 0.1 mass% and not more than 10.0 mass% of a monomer unit of a monomer including at least two vinyl functional groups; and 5.0 mass% or less of an aromatic vinyl monomer unit, and
the at least one type of monomer unit selected from a monofunctional unsaturated carboxylic acid monomer unit and a monofunctional unsaturated sulfonic acid monomer unit is not less than 0.1 mol and not more than 15,000 mol relative to 1 mol of the monomer unit of the monomer including at least two vinyl functional groups.

The term "core-shell particles" refers to particles having a multilayer structure (core-shell structure) in which a shell portion covers the surface of a core portion.

The phrase "includes a monomer unit" means that "a polymer obtained with that monomer includes a repeating unit derived from the monomer".

The term "unsaturated carboxylic acid ester monomer" refers to an unsaturated carboxylic acid ester that includes an ethylenically unsaturated bond.

The term "unsaturated carboxylic acid monomer" refers to an unsaturated carboxylic acid that includes an ethylenically unsaturated bond and is inclusive of an anhydride thereof.

The term "monofunctional unsaturated carboxylic acid ester monomer" refers to an unsaturated carboxylic acid ester that includes one ethylenically unsaturated bond.

The term "monofunctional unsaturated carboxylic acid monomer" refers to an unsaturated carboxylic acid that includes one ethylenically unsaturated bond and is inclusive of an anhydride thereof.

The term "monofunctional unsaturated sulfonic acid monomer" refers to an unsaturated sulfonic acid that includes one ethylenically unsaturated bond and is inclusive of an anhydride thereof.

The mechanism by which excellent close adherence between a substrate and a layer obtained using the presently disclosed binder composition is obtained in a secondary battery in which the presently disclosed binder composition is used is presumed to be as follows.

When at least one type of monomer unit selected from a monofunctional unsaturated carboxylic acid monomer unit and a monofunctional unsaturated sulfonic acid monomer unit is introduced into the shell portion of the core-shell particles, such monomer units are soluble with respect to water that is typically contained in the binder composition and bear an electric charge in the composition, and thus electric repulsive force causes spreading out of molecular chains forming the shell portion and solubilization of the shell portion. In a situation in which a monofunctional unsaturated carboxylic acid ester monomer unit is also present in the shell portion, this can increase solubility of the shell portion through the polarity of an ester bond in that monomer unit. The shell portion that has been solubilized through spreading out of molecular chains is presumed to inhibit migration of the core-shell particles serving as a binder in production of a layer (for example, an electrode mixed material layer or porous membrane layer) of a secondary battery. Moreover, this inhibition of migration is presumed to result in excellent close adherence being obtained between a substrate and a layer obtained using the binder composition.

On the other hand, in a situation in which only a monofunctional unsaturated carboxylic acid ester monomer unit and at least one type of monomer unit selected from a monofunctional unsaturated carboxylic acid monomer unit and a monofunctional unsaturated sulfonic acid monomer unit are introduced into the shell portion, this reduces the amount of electrolyte solution-insoluble content in the core-shell particles serving as a binder when electrolyte solution is injected during assembly of a secondary battery and may cause deterioration of cycle characteristics of the secondary battery. In the present disclosure, the introduction of a specific amount of a monomer unit of a monomer including at least two vinyl functional groups is presumed to inhibit reduction of the amount of electrolyte solution-insoluble content.

Moreover, it is presumed that by setting a ratio of the monomer unit of the monomer including at least two vinyl functional groups and the at least one type of monomer unit selected from a monofunctional unsaturated carboxylic acid monomer unit and a monofunctional unsaturated sulfonic acid monomer unit within a specific range, it is possible to achieve both inhibition of migration through spreading out of molecular chains of the shell portion in an aqueous phase and inhibition of reduction of the amount of electrolyte solution-insoluble content.

In a secondary battery in which the presently disclosed binder composition is used, the mechanism set forth above is presumed to result in excellent close adherence between a substrate and a layer obtained using the binder composition and to inhibit reduction of this close adherence even after repeated charge/discharge cycling. It is also presumed to result in good cycle characteristics being displayed in a secondary battery in which the presently disclosed binder composition is used.

Furthermore, when the presently disclosed binder composition is used in production of a lithium ion secondary battery, it is possible to obtain a lithium ion secondary battery in which deposition of lithium metal is significantly inhibited, in addition to obtaining the benefits described above. This inhibition of lithium metal deposition is presumed to be due to the core-shell particles serving as a binder having excellent liquid retention of electrolyte solution and due to uneven distribution of the core-shell particles being prevented through inhibition of migration.

The present disclosure also relates to the binder composition for a secondary battery set forth above wherein an amount of tetrahydrofuran (THF) insoluble content in the polymer (a1) is not less than 40% and not more than 97%. By using a polymer (a1) in which the amount of THF-insoluble content is within the range set forth above for the core portion, an appropriate elastic modulus is imparted to the core-shell particles serving as a binder, good film formability between particles is obtained, and close adherence with a substrate can be sufficiently improved.

The amount of THF-insoluble content can be measured by a method described in the EXAMPLES section of the present specification.

The present disclosure also relates to the binder composition for a secondary battery set forth above wherein a ratio of mass of the polymer (a1) relative to mass of the polymer (a2) is not less than 95/5 and not more than 5/95. In the case of core-shell particles for which the ratio of the mass of the polymer (a1) relative to the mass of the polymer (a2) is within the range set forth above, the core portion is sufficiently covered by the shell portion, and migration can be sufficiently inhibited.

The present disclosure also relates to the binder composition for a secondary battery set forth above wherein the core-shell particles have a radius of gyration of not less than 10 nm and not more than 1,000 nm. Core-shell particles having a radius of gyration within the range set forth above are beneficial because there is sufficient spreading out of molecular chains of the shell portion such that migration is sufficiently inhibited and also because there is a relatively sufficient number of particles having excellent liquid retention of electrolyte solution, uneven distribution of electrolyte solution is inhibited, and, particularly in the case of use in a lithium ion secondary battery, lithium metal deposition can be sufficiently prevented.

The radius of gyration can be measured by a method described in the EXAMPLES section of the present specification.

Moreover, the present disclosure relates to a slurry composition for a secondary battery containing the binder composition for a secondary battery set forth above. The present disclosure also relates to the slurry composition for a secondary battery set forth above wherein non-conductive particles are contained and also relates to the slurry composition for a secondary battery set forth above wherein an electrode active material is contained.

Furthermore, the present disclosure relates to a functional layer for a secondary battery formed using the slurry composition for a secondary battery set forth above. The present disclosure also relates to a separator for a secondary battery including a functional layer for a secondary battery that is formed on a separator substrate using the slurry composition for a secondary battery containing non-conductive particles set forth above and also relates to an electrode for a secondary battery including a functional layer for a secondary battery that is formed on a current collector using the slurry composition for a secondary battery containing electrode active material particles set forth above.

Also, the present disclosure relates to a secondary battery including the functional layer for a secondary battery set forth above. The present disclosure also relates to a secondary battery including the separator for a secondary battery set forth above and also relates to a secondary battery including the electrode for a secondary battery set forth above.

(Advantageous Effect)

Through the presently disclosed binder composition for a secondary battery, it is possible to obtain excellent close adherence between a substrate and a layer obtained using the binder composition in production of a separator, electrode, or the like of a secondary battery and also to obtain a secondary battery having good cycle characteristics. When the presently disclosed binder composition for a secondary battery is used, reduction of close adherence is inhibited even after repeated charge/discharge cycling.

Moreover, a lithium ion secondary battery in which the presently disclosed binder composition is used has significantly inhibited lithium metal deposition, in addition to the benefits described above.

DETAILED DESCRIPTION

The following provides a detailed description of embodiments of the present disclosure.

The presently disclosed binder composition for a secondary battery is for use in production of a secondary battery (for example, a non-aqueous secondary battery such as a lithium ion secondary battery) and can, for example, be used to produce the presently disclosed slurry composition for a secondary battery.

The presently disclosed slurry composition for a secondary battery can be used to form any functional layer (for example, an electrode mixed material layer, a porous membrane layer, or an adhesive layer) having a function such as giving and receiving electrons, reinforcement, or adhesion inside a secondary battery (for example, a non-aqueous secondary battery such as a lithium ion secondary battery).

The presently disclosed functional layer for a secondary battery is formed from the presently disclosed slurry composition for a secondary battery.

Moreover, the presently disclosed separator for a secondary battery and electrode for a secondary battery include the presently disclosed functional layer for a secondary battery.

Furthermore, the presently disclosed secondary battery (for example, a non-aqueous secondary battery such as a lithium ion secondary battery) includes at least one of the presently disclosed functional layer for a secondary battery, separator for a secondary battery, and electrode for a secondary battery.

<Binder composition for secondary battery>

The presently disclosed binder composition for a secondary battery contains a polymer and a solvent.

[Polymer]

The presently disclosed binder composition for a secondary battery contains a polymer. The polymer is core-shell particles including a core portion formed of a polymer (a1) and a shell portion formed of a polymer (a2).

(Polymer (a1))

The core portion formed of the polymer (a1) may be any polymer that is known as a binder without any specific limitations.

-Amount of THF-insoluble content in polymer (a1)-

The amount of THF-insoluble content in the polymer (a1) is preferably 40% or more, and is preferably 97% or less. The amount of THF-insoluble content is more preferably 45% or more, and even more preferably 50% or more, and is more preferably 95% or less, and even more preferably 93% or less.

The amount of THF-insoluble content can be adjusted through the types and amounts of monomers used to produce the polymer (a1), for example. Note that a water dispersion of a polymer having the same chemical composition as the polymer (a1) may be produced, the amount of THF-insoluble content therein may be measured, and the measured amount may be taken to be the amount of THF-insoluble content in the polymer (a1).

-Chemical composition of polymer (a1)-

The polymer (a1) can be a polymer having any chemical composition and may, for example, be a polymer that includes an unsaturated carboxylic acid ester monomer unit and an unsaturated carboxylic acid monomer unit.

Examples of unsaturated carboxylic acid esters that can form the unsaturated carboxylic acid ester monomer unit include, but are not specifically limited to, acrylic acid alkyl esters (for example, an alkyl ester having a carbon number of not less than 1 and not more than 20, and preferably an alkyl ester having a carbon number of not less than 1 and not more than 10) such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters (for example, an alkyl ester having a carbon number of not less than 1 and not more than 20, and preferably an alkyl ester having a carbon number of not less than 1 and not more than 10) such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate.

Of these unsaturated carboxylic acid esters, methyl methacrylate, ethyl methacrylate, and n-butyl acrylate are preferable in terms of polymerization stability and formation of a core-shell structure, and a combination of methyl methacrylate and n-butyl acrylate is more preferable.

The unsaturated carboxylic acid ester monomer unit may be one type of unit or a combination of two or more types of units in a freely selected ratio.

Examples of unsaturated carboxylic acids that can form the unsaturated carboxylic acid monomer include, but are not specifically limited to, acrylic acid, methacrylic acid, crotonic acid, maleic acid, fumaric acid, and itaconic acid. Note that an unsaturated dicarboxylic acid may be in the form of an anhydride.

Of these unsaturated carboxylic acids, acrylic acid, methacrylic acid, and itaconic acid are more preferable in terms of polymerization stability and formation of a core-shell structure, and acrylic acid and methacrylic acid are even more preferable.

When the polymer (a1) is taken to be 100.0 mass%, the unsaturated carboxylic acid ester monomer unit is preferably 20.0 mass% or more, and more preferably 30.0 mass% or more, and is preferably 99.9 mass% or less, and more preferably 90.0 mass% or less. When the unsaturated carboxylic acid ester monomer unit is not less than any of the lower limits set forth above, the shell portion can sufficiently cover the core portion and be fixed to the core portion, and foaming of the binder composition or a slurry composition can be inhibited. Moreover, when the unsaturated carboxylic acid ester monomer unit is not more than any of the upper limits set forth above, the amount of electrolyte solution-insoluble content is sufficient, and good cycle characteristics can be obtained.

The unsaturated carboxylic acid monomer unit is preferably 0.1 mass% or more, and more preferably 1.0 mass% or more, and is preferably 5.0 mass% or less, and more preferably 4.5 mass% or less. The core-shell particles are sufficiently stabilized and good close adherence with a substrate can be obtained when the unsaturated carboxylic acid monomer unit is not less than any of the lower limits set forth above, whereas the shell portion can sufficiently cover the core portion and foaming of the binder composition or a slurry composition can be inhibited when the unsaturated carboxylic acid monomer unit is not more than any of the upper limits set forth above.

The polymer including the unsaturated carboxylic acid ester monomer unit and the unsaturated carboxylic acid monomer unit can include other monomer units. Examples of monomers that can form other monomer units include aliphatic conjugated dienes such as 1,3-butadiene, 2-methyl-1,3-butadiene (isoprene), and 2,3-dimethyl-1,3-butadiene; and aromatic vinyls such as styrene, styrene sulfonic acid and salts thereof, α-methylstyrene, butoxystyrene, and vinylnaphthalene. Such other monomer units can be set as 10.0 mass% or less.

An aliphatic conjugated diene monomer unit can be included as another monomer unit, for example, in order to reduce the amount of electrolyte solution-insoluble content. For example, the polymer (a1) may be formed of an unsaturated carboxylic acid ester monomer unit, an unsaturated carboxylic acid monomer unit, and an aliphatic conjugated diene monomer unit. In this situation, the aliphatic conjugated diene monomer can be 5.0 mass% or more, and preferably 10.0 mass% or more, and can be 50.0 mass% or less, and preferably 45.0 mass% or less. The previously described examples and preferred ranges are applicable for the amounts of the unsaturated carboxylic acid ester monomer unit and the unsaturated carboxylic acid monomer unit.

Examples of polymers other than the polymer described above that can be used as the polymer (a1) include aliphatic conjugated diene polymers such as polybutadiene and polyisoprene, aromatic vinyl-aliphatic conjugated diene copolymers such as a styrene-butadiene polymer (SBR) and a styrene-butadiene-styrene polymer (SBS), vinyl cyanide-conjugated diene copolymers such as an acrylonitrile-butadiene polymer (NBR), hydrogenated SBR, and hydrogenated NBR. Moreover, a polymer described in JP6520720B2 can be used.

(Shell portion formed of polymer (a2))

The shell portion is formed of the polymer (a2). The polymer (a2) includes: not less than 50.0 mass% and not more than 89.9 mass% of a monofunctional unsaturated carboxylic acid ester monomer unit; not less than 10.0 mass% and not more than 49.9 mass% of at least one type of monomer unit selected from a monofunctional unsaturated carboxylic acid monomer unit and a monofunctional unsaturated sulfonic acid monomer unit; not less than 0.1 mass% and not more than 10.0 mass% of a monomer unit of a monomer including at least two vinyl functional groups; and 5.0 mass% or less of an aromatic vinyl monomer unit. The content of each monomer unit is based on 100.0 mass% of the polymer (a2).

In the polymer (a2), the at least one type of monomer unit selected from a monofunctional unsaturated carboxylic acid monomer unit and a monofunctional unsaturated sulfonic acid monomer unit is not less than 0.1 mol and not more than 15,000 mol relative to 1 mol of the monomer unit of the monomer including at least two vinyl functional groups.

-Amounts of monomer units-

In a situation in which the monofunctional unsaturated carboxylic acid ester monomer unit is less than 50.0 mass%, the shell portion does not sufficiently cover the core portion and is not sufficiently fixed to the core portion, and foaming of the binder composition or a slurry composition readily occurs. On the other hand, in a situation in which the monofunctional unsaturated carboxylic acid ester monomer is more than 89.9 mass%, the shell portion has a low tendency to dissolve in water, molecular chains of the shell portion do not spread out, migration inhibiting ability decreases, and it becomes difficult to improve close adherence.

In a situation in which the at least one type of monomer unit selected from a monofunctional unsaturated carboxylic acid monomer unit and a monofunctional unsaturated sulfonic acid monomer unit (hereinafter, also referred to as the "monofunctional unsaturated carboxylic acid and/or sulfonic acid monomer unit") is less than 10.0 mass%, the shell portion has a low tendency to dissolve in water, molecular chains of the shell portion do not spread out, migration inhibiting ability decreases, and it becomes difficult to improve close adherence. On the other hand, in a situation in which the monofunctional unsaturated carboxylic acid and/or sulfonic acid monomer unit is more than 49.9 mass%, the shell portion does not sufficiently cover the core portion and is not sufficiently fixed to the core portion, and foaming of the binder composition or a slurry composition readily occurs.

The monofunctional unsaturated carboxylic acid and/or sulfonic acid monomer unit is preferably 13.0 mass% or more, and more preferably 16.0 mass% or more, and is preferably 49.0 mass% or less, and more preferably 48.0 mass% or less.

In a situation in which the monomer unit of the monomer including at least two vinyl functional groups is less than 0.1 mass%, solubility in electrolyte solution of the core-shell particles serving as a binder increases, functionality thereof as a binder weakens, and cycle characteristics and post-cycling test peel strength deteriorate. Moreover, liquid retention of electrolyte solution decreases, which means that deposition of lithium metal cannot be sufficiently inhibited in the case of use in a lithium ion secondary battery. On the other hand, in a situation in which the monomer unit of the monomer including at least two vinyl functional groups is more than 10.0 mass%, a crosslinked structure in the shell portion increases, the shell portion has a lower tendency to dissolve in water, molecular chains of the shell portion do not spread out, migration inhibiting ability decreases, and it becomes difficult to improve close adherence. The monomer unit of the monomer including at least two vinyl functional groups is preferably 0.2 mass% or more, and more preferably 0.5 mass% or more, and is preferably 8.0 mass% or less, and more preferably 3.0 mass% or less.

In a situation in which the aromatic vinyl monomer unit is more than 5.0 mass%, the shell portion does not sufficiently cover the core portion, and foaming of the binder composition or a slurry composition readily occurs. The aromatic vinyl monomer unit is preferably 4.0 mass% or less, and more preferably 2.0 mass% or less, and may be 0.0 mass%.

Although the polymer (a2) can include other monomer units to the extent that the disclosed effects are not lost, the polymer (a2) is preferably formed of not less than 50.0 mass% and not more than 89.9 mass% of a monofunctional unsaturated carboxylic acid ester monomer unit, not less than 10.0 mass% and not more than 49.9 mass% of a monofunctional unsaturated carboxylic acid and/or sulfonic acid monomer unit, not less than 0.1 mass% and not more than 10.0 mass% of a monomer unit of a monomer including at least two vinyl functional groups, and 5.0 mass% or less (and possibly 0.0%) of an aromatic vinyl monomer unit.

In a situation in which the monofunctional unsaturated carboxylic acid and/or sulfonic acid monomer unit is less than 0.1 mol relative to 1 mol of the monomer unit of the monomer including at least two vinyl functional groups, molecular chains of the shell portion do not spread out, migration inhibiting ability decreases, and it becomes difficult to improve close adherence. Moreover, in a situation in which the monofunctional unsaturated carboxylic acid and/or sulfonic acid monomer unit is more than 15,000 mol relative to 1 mol of the monomer unit of the monomer including at least two vinyl functional groups, solubility in electrolyte solution of the core-shell particles serving as a binder increases, functionality thereof as a binder weakens, and cycle characteristics and post-cycling test peel strength deteriorate. The monofunctional unsaturated carboxylic acid and/or sulfonic acid monomer unit is preferably 0.15 mol or more, and more preferably 0.25 mol or more relative to 1 mol of the monomer unit of the monomer including at least two vinyl functional groups, and is preferably 14,000 mol or less, and more preferably 13,500 mol or less relative to 1 mol of the monomer unit of the monomer including at least two vinyl functional groups.

-Monofunctional unsaturated carboxylic acid ester monomer unit-

Examples of monofunctional unsaturated carboxylic acid ester monomers that can form the monofunctional unsaturated carboxylic acid ester monomer unit include mono and polycarboxylic acid esters, with monocarboxylic acid esters being preferable in terms of formation of a core-shell structure, and acrylic acid esters, methacrylic acid esters, and the like being more preferable. The ester may be an alkyl ester and, in terms of polymerization stability and formation of a core-shell structure, can be set as an alkyl ester having a carbon number of not less than 1 and not more than 20, and preferably an alkyl ester having a carbon number of not less than 1 and not more than 10.

Specific examples include methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, stearyl acrylate, and the like; and also methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, stearyl methacrylate, and the like.

Of these specific examples, methyl methacrylate, ethyl acrylate, n-butyl acrylate, 2-ethylhexyl acrylate, and the like are preferable in terms of formation of a core-shell structure.

The monofunctional unsaturated carboxylic acid ester monomer unit may be one type of unit or may be a combination of two or more types of units in a freely selected ratio.

-Monofunctional unsaturated carboxylic acid and/or sulfonic acid monomer unit-

Examples of monofunctional unsaturated carboxylic acids that can form the monofunctional unsaturated carboxylic acid monomer unit include mono and polycarboxylic acids, with monocarboxylic acids being preferable in terms of spreading of molecular chains of the shell portion, acrylic acid, methacrylic acid, crotonic acid, maleic acid, fumaric acid, and itaconic acid being more preferable, and acrylic acid, methacrylic acid, and itaconic acid being even more preferable.

Examples of monofunctional unsaturated sulfonic acids that can form the monofunctional unsaturated sulfonic acid monomer include vinyl sulfonic acid, p-styrene sulfonic acid, and (meth)allyl sulfonic acid, with p-styrene sulfonic acid and the like being preferable.

The monofunctional unsaturated carboxylic acid and/or sulfonic acid monomer unit may be in the form of a salt such as an alkali metal salt (Na salt, K salt, etc.), an alkaline earth metal salt (Mg salt, etc.), an ammonium salt, or the like, for example.

The monofunctional unsaturated carboxylic acid and/or sulfonic acid monomer unit may be one type of unit among those described above or may be two or more types of units in a freely selected ratio.

-Monomer unit of monomer including at least two vinyl functional groups-

The term "monomer unit of a monomer including at least two vinyl functional groups" as used in relation to the polymer (a2) is considered to not be inclusive of a monomer unit corresponding to an "aromatic vinyl monomer unit".

With regards to the monomer unit of the monomer including at least two vinyl functional groups, the number of vinyl functional groups is 2 or more but, in terms of solubility of the shell portion in water, is preferably not less than 2 and not more than 10, and more preferably not less than 2 and not more than 6.

Examples of monomers including at least two vinyl functional groups that can form the monomer unit of the monomer including at least two vinyl functional groups include aliphatic dienes such as 1,3-butadiene, 2-methyl-1,3-butadiene (isoprene), and 2,3-dimethyl-1,3-butadiene; vinyl ethers and allyl ethers of unsaturated carboxylic acids such as allyl acrylate, allyl methacrylate, vinyl acrylate, and vinyl methacrylate; and acrylic acid esters and methacrylic acid esters of polyhydric alcohols such as ethylene glycol dimethacrylate, trimethylolpropane triacrylate, pentaerythritol triacrylate, tetraethylene glycol diacrylate, ethoxylated isocyanuric acid triacrylate, ethoxylated glycerin triacrylate, di(trimethylolpropane) tetraacrylate, ethoxylated pentaerythritol tetraacrylate, dipentaerythritol polyacrylate, and dipentaerythritol hexaacrylate.

Of these monomers, ethylene glycol dimethacrylate, 1,3-butadiene, ethoxylated pentaerythritol tetraacrylate, and the like are preferable in terms of solubility in water of the shell portion.

The monomer unit of the monomer including at least two vinyl functional groups may be one type of unit or may be a combination of two or more types of units in a freely selected ratio.

-Aromatic vinyl monomer unit-

The term "aromatic vinyl monomer unit" as used in relation to the polymer (a2) is considered to not be inclusive of a monomer unit corresponding to either a "monofunctional unsaturated carboxylic acid monomer unit" or a "monofunctional unsaturated sulfonic acid monomer unit".

In a case in which an aromatic vinyl monomer unit is included, examples of monomers that can form the aromatic vinyl monomer include styrene, α-methylstyrene, butoxystyrene, and vinylnaphthalene.

The aromatic vinyl monomer unit may be one type of unit or may be a combination of two or more types of units in a freely selected ratio.

-Molecular weight of polymer (a2)-

The weight-average molecular weight of the polymer (a2) is preferably 10,000 or more, and more preferably 30,000 or more, and is preferably 10,000,000 or less, and more preferably 4,500,000 or less. When the weight-average molecular weight is within any of the ranges set forth above, migration due to the shell portion is sufficiently inhibited and good close adherence is obtained while also making it possible to sufficiently disperse the core-shell particles serving as a binder in the binder composition or a slurry composition and to obtain good cycle characteristics.
The weight-average molecular weight can be measured by a measurement method described in the EXAMPLES section of the present specification.

(Core-shell particles)

The core-shell particles include a core portion formed of the polymer (a1) and a shell portion formed of the polymer (a2).

-Mass ratio of polymer (a1) and polymer (a2)-

A ratio of the mass of the polymer (a1) relative to the mass of the polymer (a2) in the core-shell particles (mass of a1/mass of a2) is preferably 95/5 or less, more preferably 90/10 or less, and even more preferably 87/13 or less, and is preferably 5/95 or more, more preferably 10/90 or more, and more preferably 13/87 or more.

-Radius of gyration of core-shell particles-

The radius of gyration of the core-shell particles is preferably 10 nm or more, more preferably 30 nm or more, and even more preferably 50 nm or more, and is preferably 1,000 nm or less, more preferably 800 nm or less, and even more preferably 600 nm or less.

-Production method of core-shell particles-

The production method of the core-shell particles is not specifically limited but is preferably emulsion polymerization, solution polymerization, bulk polymerization, suspension polymerization, or the like in terms of easily obtaining core-shell particles.
The emulsion polymerization may be a method in which monomers for forming the polymer (a1) are radical polymerized in an aqueous solvent in the presence of an emulsifier and a polymerization initiator to obtain the polymer (a1), and then monomers for forming the polymer (a2) are added and are polymerized. In terms of covering the outer surface of the core portion with the shell portion, it is preferable that the monomers for forming the polymer of the shell portion are supplied into the polymerization system continuously or divided into a plurality of portions.
The emulsifier is not specifically limited and may be an anionic surfactant such as sodium dodecylbenzenesulfonate or sodium dodecyl sulfate (sodium lauryl sulfate) or a cationic surfactant such as octadecylamine acetate, for example.
The emulsifier may be one type of emulsifier or may be a combination of two or more types of emulsifiers in a freely selected ratio.
The polymerization initiator is not specifically limited and may be a peroxide such as t-butyl peroxy-2-ethylhexanoate, potassium persulfate, ammonium persulfate, or cumene peroxide or an azo compound such as 2,2'-azobis(2-methyl-N-(2-hydroxyethyl)-propionamide) or 2,2'-azobis(2-amidinopropane) hydrochloride, for example.
The polymerization initiator may be one type of polymerization initiator or may be a combination of two or more types of polymerization initiators in a freely selected ratio.
A chain transfer agent can be used in the reaction. The chain transfer agent is not specifically limited but is preferably an alkyl mercaptan, and more preferably t-dodecyl mercaptan.
Water may be used as the aqueous solvent, or a mixture with a hydrophilic solvent other than water may be used so long as monomers used in production of the core-shell particles can be dissolved or dispersed therein. The hydrophilic solvent may be an alcohol such as methanol, ethanol, n-propanol, or isopropanol; a ketone such as acetone or methyl ethyl ketone; a polyalkylene glycol such as ethylene glycol, diethylene glycol, or propylene glycol; an alkyl ether of a polyalkylene glycol; a lactam such as N-methyl-2-pyrrolidone; or the like, for example.
Adjustment of the pH of the core-shell particles after polymerization using a basic compound is preferable in terms of causing the shell portion to bear an electric charge and molecular chains to spread out due to repulsive force thereof. In a case in which an aqueous solvent is used, the pH of the reaction liquid after polymerization is normally roughly 0.2 to 6, and thus pH adjustment using a basic compound is normally an operation corresponding to neutralization.

In terms of slurry stability, it is preferable that the pH is adjusted to not lower than 4 and not higher than 9. The basic compound may be an organic amine such as methylamine, dimethylamine, trimethylamine, ethylamine, diethylamine, triethylamine, 2-aminoethanol, or 2-dimethylaminoethanol; an inorganic basic compound such as ammonia (water), sodium hydroxide, potassium hydroxide, or lithium hydroxide; a quaternary ammonium hydroxide such as tetramethylammonium hydroxide, tetra-n-butylammonium hydroxide, or trimethylbenzylammonium hydroxide; or the like, for example. Of these basic compounds, inorganic basic compounds such as sodium hydroxide and potassium hydroxide are preferable. The basic compound may be one type of basic compound or may be a combination of two or more types of basic compounds in a freely selected ratio.

The core-shell particles are preferably produced such that a ratio of the viscosity of the binder composition after pH adjustment relative to the viscosity of the binder composition before pH adjustment (post-adjustment viscosity/pre-adjustment viscosity) is 1.5 times or more, and more preferably 1.6 times or more. Although no specific limitations are placed on the upper limit for this ratio, the ratio is normally 500 times or less. When this ratio is within any of the ranges set forth above, molecular chains of the shell portion sufficiently spread out, migration is sufficiently inhibited, the core-shell particles serving as a binder are sufficiently dispersed in the binder composition or a slurry composition, and good cycle characteristics can be obtained.

[Solvent]

The presently disclosed binder composition for a secondary battery contains a solvent. The solvent can be an aqueous solvent, and may be water or a mixed solvent of water and a hydrophilic organic solvent, of which, water is preferable. The description in relation to production of the core-shell particles (inclusive of examples and preferred examples) is applicable to the aqueous solvent. The aqueous solvent used in production of the core-shell particles can be used in that form as the aforementioned aqueous solvent.

[Binder composition production, etc.]

A product having core-shell particles obtained through emulsion polymerization dispersed in an aqueous solvent may be used in that form as the presently disclosed binder composition for a secondary battery, or this product may be subjected to pH adjustment, removal of unreacted monomer, removal of solvent, and the like as necessary in order to produce the presently disclosed binder composition for a secondary battery. The methods of removal of unreacted monomer and removal of solvent are not specifically limited and may be heating, vacuum distillation, a combination thereof, or the like.

The amount of electrolyte solution-insoluble content in the binder composition is preferably 50% or more, and more preferably 55% or more. The upper limit is 100%, and the amount of electrolyte solution-insoluble content may be 100%. When the amount of electrolyte solution-insoluble content is within any of the ranges set forth above, the core-shell particles maintain a core-shell structure, sufficient close adherence is obtained, and good cycle characteristics can be retained.

The amount of electrolyte solution-insoluble content can be measured by a method described in the EXAMPLES section of the present specification.

Although the binder composition can contain a binder or the like other than the core-shell particles, it is beneficial for the core-shell particles to be 5 parts by mass or more, and preferably 20 parts by mass or more relative to 100 parts by mass of binder. Moreover, it is possible to use just the core-shell particles as a binder. Examples of binders other than the core-shell particles that can be used include aliphatic conjugated diene polymers such as polybutadiene and polyisoprene, aromatic vinyl-aliphatic conjugated diene copolymers such as a styrene-butadiene polymer (SBR) and a styrene-butadiene-styrene polymer (SBS), vinyl cyanide-conjugated diene copolymers such as an acrylonitrile-butadiene polymer (NBR), hydrogenated SBR, and hydrogenated NBR.

The binder composition may also contain components such as thickeners, wetting agents, conductive additives, reinforcing materials, leveling agents, additives for electrolyte solution, and defoamers to the extent that the disclosed effects are not lost. These components may be one type or may be a combination of two or more types in a freely selected ratio.

The solid content concentration of the binder composition is not specifically limited and can, for example, be set as not less than 5 mass% and not more than 70 mass%.

<Slurry composition for secondary battery>

The presently disclosed slurry composition for a secondary battery is a composition that is used to form any functional layer in a secondary battery (for example, a non-aqueous secondary battery such as a lithium ion secondary battery). The presently disclosed slurry composition for a secondary battery contains the presently disclosed binder composition for a secondary battery and can further contain functional particles and other components. By applying the presently disclosed slurry composition for a secondary battery onto a substrate and performing drying thereof, for example, it is possible to obtain a functional layer having excellent close adherence as a result of the presently disclosed slurry composition for a secondary battery containing the presently disclosed binder composition for a secondary battery.

[Binder composition]

The amount of the presently disclosed binder composition for a secondary battery in the slurry composition can be set in accordance with the functional layer without any specific limitations.

In a case in which the slurry composition is to be used to produce an electrode mixed material layer, the binder composition can be set as an amount such that the amount of binders (core-shell particles and optional binders) is not less than 0.5 parts by mass and not more than 15 parts by mass in terms of solid content relative to 100 parts by mass of electrode active material particles.

In a case in which the slurry composition is to be used to produce a porous membrane layer, the binder composition can be set as an amount such that the amount of binders (core-shell particles and optional binders) is not less than 0.5 parts by mass and not more than 30 parts by mass in terms of solid content relative to 100 parts by mass of non-conductive particles.

[Functional particles]

The slurry composition can contain functional particles in accordance with the desired functional layer. The functional particles may be electrode active material particles in a case in which the functional layer is an electrode mixed material layer and may be non-conductive particles in a case in which the functional layer is a porous membrane layer.

(Electrode active material particles)

The electrode active material particles may be particles formed of a known electrode active material that is used in secondary batteries without any specific limitations. For example, particles formed of any of the following electrode active materials may be used in the case of an electrode mixed material layer of a lithium ion secondary battery.

-Positive electrode active material-

A positive electrode active material compounded in a positive electrode mixed material layer of a positive electrode in a lithium ion secondary battery may be a compound that includes a transition metal such as a transition metal oxide, a transition metal sulfide, or a complex metal oxide of lithium and a transition metal, for example, without any specific limitations.

The transition metal may be Ti, V, Cr, Mn, Fe, Co, Ni, Cu, Mo, or the like.

Specific examples include lithium-containing cobalt oxide ($LiCoO_2$), lithium manganate ($LiMn_2O_4$), lithium-containing nickel oxide ($LiNiO_2$), a lithium-containing complex oxide of Co-Ni-Mn, a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, and $LiNi_{0.5}Mn_{1.5}O_4$.

The positive electrode active material may be one type of positive electrode active material or may be a combination of two or more types of positive electrode active materials in a freely selected ratio.

-Negative electrode active material-

A negative electrode active material that is compounded in a negative electrode mixed material layer of a negative electrode in a lithium ion secondary battery may be a carbon-based negative electrode active material, a metal-based negative electrode active material, a negative electrode active material that is a combination thereof, or the like without any specific limitations.

The term "carbon-based negative electrode active material" refers to an active material having carbon as a main framework into which lithium can be inserted (also referred to as "doping") and examples thereof include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon, and graphitic materials such as natural graphite and artificial graphite.

A metal-based negative electrode active material is an active material that contains metal and is normally an active material that includes an element allowing insertion of lithium in the structure thereof and has a theoretical electric capacity per unit mass of 500 mAh/g or more when lithium is inserted. Examples thereof include lithium metal, simple substances of metal that can form a lithium alloy (for example, Ag, Al, Ba, Bi, Cu, Ga, Ge, In, Ni, P, Pb, Sb, Si, Sn, Sr, Zn, or Ti), and oxides, sulfides, nitrides, silicides, carbides, and phosphides thereof. Other examples include oxides such as lithium titanate.

The negative electrode active material may be one type of negative electrode active material or may be a combination of two or more types of negative electrode active materials in a freely selected ratio.

(Non-conductive particles)

The non-conductive particles may be any known non-conductive particles that are used in secondary batteries without any specific limitations.

Although the non-conductive particles may be inorganic fine particles or organic fine particles, inorganic fine particles are normally used. In particular, a material that is electrochemically stable and is stably present in the environment of use of a secondary battery is preferable.

From this perspective, the non-conductive particles are, for example, preferably particles of an oxide such as aluminum oxide (alumina), hydrous aluminum oxide (boehmite), silicon oxide, magnesium oxide (magnesia), calcium oxide, titanium oxide (titania), $BaTiO_3$, $ZrO$, or alumina-silica complex oxide; particles of a nitride such as aluminum nitride or boron nitride; particles of covalently bonded crystals such as silicon or diamond; particles of sparingly soluble ionic crystals such as barium sulfate, calcium fluoride, or barium fluoride; or fine particles of clay such as talc or montmorillonite. These particles may be subjected to element substitution, surface treatment, solid solution treatment, or the like as necessary.

The non-conductive particles may be one type of non-conductive particles or may be a combination of two or more types of non-conductive particles in a freely selected ratio.

[Other components]

The slurry composition can contain other components to the extent that the disclosed effects are not lost. The description relating to the binder composition (inclusive of examples and preferred examples) is applicable to these other components.

These other components may be one type or may be a combination of two or more types in a freely selected ratio.

[Slurry composition production, etc.]

No specific limitations are placed on the method by which the slurry composition is produced.

For example, in a case in which the slurry composition is to be used to produce an electrode mixed material layer, the slurry composition can be produced by mixing the binder composition, electrode active material particles, and other components that are used as necessary in the presence of a solvent.

In a case in which the slurry composition is to be used to produce a porous membrane layer, the slurry composition can be produced by mixing the binder composition, non-conductive particles, and other components that are used as necessary in the presence of a solvent.

In a case in which the slurry composition is to be used to produce an adhesive layer, the binder composition can be used as the slurry composition in that form or after dilution with a solvent, or the slurry composition can be produced by mixing the binder composition and other components that are used as necessary in the presence of a solvent.

The solvent used in production of the slurry composition includes the solvent of the binder composition. The solvent may be water, an alcohol, a ketone, or the like without any specific limitations. The mixing method is not specifically limited and can be performed using a known stirrer, disperser, or the like.

<Functional layer for secondary battery>

The presently disclosed functional layer for a secondary battery is a layer having a function such as giving and receiving electrons, reinforcement, or adhesion inside a secondary battery (for example, a non-aqueous secondary battery such as a lithium ion secondary battery) and may, for example, be an electrode mixed material layer that gives and receives electrons through electrochemical reactions, a porous membrane layer that improves heat resistance and/or strength, or an adhesive layer that improves adhesiveness.

The presently disclosed functional layer is formed from the presently disclosed slurry composition for a secondary battery and can, for example, be formed by applying the slurry composition onto a substrate, for example, and then drying the slurry composition. The presently disclosed slurry composition for a secondary battery makes it possible to obtain excellent close adherence between a substrate and a functional layer formed from the slurry composition as a result of containing the presently disclosed binder composition for a secondary battery.

[Substrate]

No specific limitations are placed on the substrate onto which the slurry composition is applied. In a case in which an electrode mixed material layer is to be formed, a current collector may be used as the substrate, and the slurry composition may be applied onto and dried on the current collector to form a layer.

In a case in which a porous membrane layer or an adhesive layer is to be formed, a separator substrate or an electrode substrate may be used as the substrate, and the slurry composition may be applied onto and dried on the substrate to form a layer.

The slurry composition can alternatively be applied onto and dried on the surface of a releasable substrate to form a functional layer, the releasable substrate can then be peeled off, and the functional layer peeled from the releasable substrate can be used as a free-standing film in production of a secondary battery.

(Current collector)

Any material having electrical conductivity and electrochemical durability can be used as the current collector without any specific limitations. For example, the current collector may be formed of iron, copper, aluminum, nickel, stainless steel, titanium, tantalum, gold, platinum, or the like. Of these materials, copper foil is particularly preferable as a current collector used for a negative electrode. On the other hand, aluminum foil is particularly preferable as a current collector used for a positive electrode. The material of the current collector may be one type of material or may be a combination of two or more types of materials in a freely selected ratio.

(Separator substrate)

The separator substrate may be a known separator substrate such as an organic separator substrate without any specific limitations. The organic separator substrate is a porous member formed of an organic material and may, for example, be a microporous membrane or non-woven fabric containing a polyolefin resin such as polyethylene or polypropylene, an aromatic polyamide resin, or the like. A microporous membrane or non-woven fabric made of polyethylene is preferable in terms of having excellent strength.

(Electrode substrate)

The electrode substrate (positive electrode substrate or negative electrode substrate) is not specifically limited and may be an electrode substrate that has an electrode mixed material layer containing electrode active material particles and a binder formed on a current collector such as described above.

The electrode active material particles and the binder contained in the electrode mixed material layer are not specifically limited and can be electrode active material particles such as described in relation to the slurry composition and a binder other than core-shell particles such as described in relation to the binder composition. The presently disclosed functional layer may be used as the electrode mixed material layer of the electrode substrate.

[Formation of functional layer]

The method by which the functional layer is formed on a substrate such as a current collector, a separator substrate, or an electrode substrate is not specifically limited and may be any of the following methods, for example.

(1) A method in which the presently disclosed slurry composition is applied onto the surface of a substrate (surface at an electrode mixed material layer-side in the case of an electrode substrate) and is then dried
(2) A method in which a substrate is immersed in the presently disclosed slurry composition and is then dried
(3) A method in which the presently disclosed slurry composition is applied onto a releasable substrate and is dried to produce a functional layer that is then transferred onto the surface of a substrate

Of these methods, method (1) is preferable in terms of ease of control of thickness of the functional layer. In more detail, method (1) includes a step of applying the slurry composition onto a substrate (application step) and a step of drying the slurry composition that has been applied onto the substrate to form a functional layer (drying step).

(Application step)

No specific limitations are placed on the method by which the slurry composition is applied onto the substrate. For example, a method such as doctor blading, reverse roll coating, direct roll coating, gravure coating, extrusion coating, or brush coating may be used.

(Drying step)

A known method can be adopted as the method by which the slurry composition on the substrate is dried without any specific limitations. Examples of drying methods that may be used include drying by warm, hot, or low-humidity air, drying in a vacuum, and drying through irradiation with infrared light, electron beams, or the like.

In a case in which an electrode mixed material layer is produced as the functional layer, the electrode mixed material layer is preferably subjected to a pressing process by mold pressing, roll pressing, or the like after the drying step.

<Secondary battery>

The presently disclosed secondary battery (for example, a non-aqueous secondary battery such as a lithium ion secondary battery) includes a positive electrode, a negative electrode, a separator, and an electrolyte solution, wherein at least one of the positive electrode, the negative electrode, and the separator includes the presently disclosed functional layer for a secondary battery. The presently disclosed secondary battery can be produced by using the presently disclosed separator for a secondary battery and/or by using the presently disclosed electrode for a secondary battery as one or both of the positive electrode and the negative electrode. In the case of a positive electrode, negative electrode, or separator that does not include the presently disclosed functional layer for a secondary battery, it is possible to use any known positive electrode, negative electrode, or separator without any specific limitations.

[Electrolyte solution]

The electrolyte solution is not specifically limited and may be an organic electrolyte solution having a supporting electrolyte dissolved in an organic solvent. A lithium salt may be used as a supporting electrolyte used in a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable in terms of readily dissolving in solvents and displaying a high degree of dissociation. The electrolyte may be one type of electrolyte or may be a combination of two or more types of electrolytes in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that may be used in a lithium ion secondary battery include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. A mixture of any of these solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

[Secondary battery production, etc.]

The presently disclosed secondary battery can be produced by, for example, stacking the positive electrode and the negative electrode with the separator in-between, performing rolling, folding, or the like of the resultant laminate, as necessary, to place the laminate in a battery container, injecting the electrolyte solution into the battery container, and sealing the battery container. At least one of the positive electrode, the negative electrode, and the separator used in production includes the presently disclosed functional layer for a secondary battery.

An expanded metal, an overcurrent preventing device such as a fuse or a PTC device, a lead plate, or the like may be placed in the battery container, as necessary, in order to prevent pressure increase inside the battery and occurrence of overcharging or overdischarging. The shape of the battery may be a coin type, button type, sheet type, cylinder type, prismatic type, flat type, or the like, for example, without any specific limitations.

EXAMPLES

The following provides a more specific description of the present disclosure based on examples. However, the present disclosure is not limited to the following examples. In the following description, "%" and "parts" used in expressing quantities are by mass, unless otherwise specified.

In the case of a polymer that is produced through copolymerization of a plurality of types of monomers, the proportion in the polymer constituted by a repeating unit (monomer unit) that is formed through polymerization of a given monomer is, unless otherwise specified, normally the same as the ratio (charging ratio) of the given monomer among all monomers used in polymerization of the polymer.

Measurements and evaluations of (1) to (11), shown below, were performed in the examples and comparative examples.

(1) Weight-average molecular weight of shell portion
(2) Amount of electrolyte solution-insoluble content in binder composition
(3) Viscosity ratio of binder composition before and after neutralization
(4) Amount of THF-insoluble content in core portion polymer
(5) Radius of gyration of core-shell particles
(6) Foaming of slurry composition
(7) Peel strength of electrode
(8) Peel strength of separator coating layer
(9) Cycle characteristics of secondary battery
(10) Post-cycling test peel test
(11) Lithium metal deposition test

(1) Weight-average molecular weight of shell portion

A solution (pH 8.0) of a polymer of a shell portion by itself was produced, and the weight-average molecular weight of this polymer was measured by gel permeation chromatography (GPC) and was taken to be the weight-average molecular weight of the shell portion. The method by which the solution of a polymer of a shell portion by itself was produced was as described further below.

Measurement was performed as follows. First, the polymer of the shell portion by itself was added to approximately 5 mL of an eluent such as to have a solid content concentration of approximately 0.5 g/L, and then, at room temperature (25°C), a stirring bar was placed therein and stirring was performed at 300 rpm for 10 minutes using a magnetic stirrer so as to dissolve the polymer. Once dissolution was visually confirmed, a 0.45 µm filter was used to perform filtration and thereby produce a measurement sample. A standard substance was used to prepare a calibration curve so as to calculate the weight-average molecular weight as a standard substance-equivalent value.

The measurement conditions were as follows.

<Measurement conditions>

Column: Produced by Showa Denko K.K.; product name: Shodex OHpak (SB-G, SB-807HQ, SB-806MHQ)
Eluent: 0.1 M Tris buffer solution (0.1 M potassium chloride added)
Flow rate: 0.5 mL/min
Sample concentration: 0.05 g/L (solid content concentration)
Injection volume: 200 µL
Column temperature: 40°C
Detector: Differential refractive index detector RI (produced by Tosoh Corporation; product name: RI-8020)
Standard substance: Monodisperse pullulan (produced by Showa Denko K.K.)

(2) Amount of electrolyte solution-insoluble content in binder composition

A binder composition was applied onto a substrate made of Teflon® (Teflon is a registered trademark in Japan, other countries, or both) and was then dried in an environment having a relative humidity of 50% and a temperature of 23°C to 25°C for 24 hours to form a film of 0.5 ± 0.3 mm in thickness. The formed film was dried by a vacuum dryer at a temperature of 60°C for 10 hours, was then cut to 2 mm-square to obtain a film piece, and the obtained film piece was precisely weighed (mass Wi).

Next, the obtained film piece was added into 10 mL of $LiPF_6$ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) serving as an electrolyte solution in an environment having a temperature of 60°C. Once the entire film piece was confirmed to be immersed in the electrolyte solution, the film piece was stored for 72 hours in an environment having a temperature of 60°C.

The film piece was subsequently removed from the vessel using tweezers, was placed in a separate vessel, and 10 mL of diethyl carbonate was added thereto. Once the entire film piece was confirmed to be immersed in the liquid, the film piece was washed by being left in the liquid for 2 hours at a temperature of 25°C.

The film piece was subsequently removed from the vessel using tweezers, was placed in a separate vessel, and 10 mL of ethanol was added thereto. Once the entire film piece was confirmed to be immersed in the liquid, the film piece was washed by being left in the liquid for 2 hours at a temperature of 25°C.

The film piece was removed from the vessel, was placed on a Kimwipe, and was dried in a draft for 2 hours. Next, the film piece was loaded into a vacuum dryer, was dried for at least 2 hours under depressurization to a gauge pressure of -0.09 MPa or lower at 25°C, and was then precisely weighed (mass W2).

The amount of electrolyte solution-insoluble content was determined from the mass Wi and the mass $W_2$ by the following formula.

$$\text{Amount of electrolyte solution-insoluble content (\%)} = W_2/W_1 \times 100$$

(3) Viscosity ratio of binder composition before and after neutralization

Viscosity measurement was performed using a B-type viscometer under conditions of a temperature of 25°C, a spindle rotation speed of 60 rpm, and a spindle rotation time of 60 seconds.

A post-polymerization solution that had not been neutralized was diluted to a solid content concentration of 10% with deionized water, and the viscosity thereof was measured (viscosity $\eta_1$).

Next, the post-polymerization solution was neutralized to pH 8.0 through addition of an alkaline aqueous solution under stirring. The solid content concentration was adjusted to 10%, and then the post-neutralization viscosity was measured (viscosity $\eta_2$).

A viscosity ratio $\eta_3$ of the binder composition before and after neutralization was determined from the viscosity $\eta_1$ and the viscosity $\eta_2$ by the following formula.

$$\eta_3 = \eta_2/\eta_1$$

A higher value for the viscosity ratio $\eta_3$ indicates that migration of the binder composition is inhibited.

(4) Amount of THF-insoluble content in core portion polymer

A solution of a core portion polymer was applied onto a substrate and was dried in an environment having a humidity of 50% and a temperature of 22°C to 25°C for 24 hours to form a film of approximately 0.3 mm in thickness. The formed film was cut to 2 mm to 3 mm-square, and an obtained film piece was precisely weighed (mass wo).

The film piece was immersed in 75 mL of tetrahydrofuran (THF) at a temperature of 25°C for 24 hours. The film piece was subsequently pulled up from the THF, was vacuum dried at a temperature of 105°C for 3 hours, and was precisely weighed to determine the mass of insoluble content (mass wi).

The amount of THF-insoluble content was determined from the mass wo and the mass $w_1$ by the following formula.

$$\text{Amount of THF-insoluble content (mass\%)} = (w_1/w_0) \times 100$$

(5) Radius of gyration of core-shell particles

The radius of gyration was determined by preparing a Zimm plot by static light scattering using a field-flow fractionation (hereinafter, "FFF") device having a multi-angle light scattering (hereinafter, "MALS") detector connected thereto. The FFF device is a device that can cause a measurement solution to pass through a gap (channel) of not

smaller than 100 $\mu$m and not larger than 500 $\mu$m and can apply a field when causing passage through the channel.

A measurement sample containing core-shell particles was injected in an amount of 50 $\mu$L into the FFF device having the MALS detector connected thereto and was subjected to static light scattering measurement at a flow rate of 1.0 mL/min.

The measurement conditions were as follows.

<Measurement conditions>

MALS detector: Produced by Postnova Analytics; product name: PN3621 MALS
FFF device: Produced by Postnova Analytics; product name: AF2000
RI detector: Produced by Postnova Analytics; product name: PN3150 RI
Channel: Polyether sulfone membrane 10 kDa
Eluent: Phosphate buffer solution (ImM)
Measurement sample: Sample adjusted to solid content of 0.1% by using 900 $\mu$L of pH 7.4 phosphate buffer solution (1 mM) to dilute 100 $\mu$L of core-shell particles diluted to 1% with deionized water

(6) Foaming of slurry composition

A slurry composition for a secondary battery was loaded in an amount of 100 g into a vessel having an internal diameter of 6 cm and was mixed at a temperature of 25°C and 2,000 rpm for 5 minutes using a disper having a sawtooth disc turbine blade of 3 cm in diameter attached thereto. Thereafter, the composition was loaded into a pressurizable case, the internal pressure of the case was set to 0.1 MPa with nitrogen gas, and this state was maintained for 3 minutes. The composition was removed from the case and then a ×20 magnifying glass was used to count the number of bubbles of 0.1 mm or more in diameter that were present at the liquid surface of the composition.

A: Fewer than 2 bubbles
B: Not fewer than 2 and fewer than 6 bubbles
C: Not fewer than 6 and fewer than 10 bubbles
D: 10 bubbles or more

A smaller number of bubbles indicates that foaming of the composition is inhibited.

(7) Peel strength of electrode

A test specimen having a rectangular shape of 100 mm in length by 10 mm in width was cut out from an electrode (negative electrode or positive electrode). The test specimen was fixed to a test stage with the surface of an electrode mixed material layer facing upward. Cellophane tape (tape prescribed by JIS Z1522) was affixed to the surface of the electrode mixed material layer of the test specimen that had been fixed in place, and then the cellophane tape was peeled off from one end of the test specimen in a direction at 180° and at a speed of 50 mm/min, and the stress during this peeling was measured. Five measurements were made in this manner. The average value of these measurements was taken to be the peel strength and was judged by the following standard.

A: Peel strength of 10 N/m or more
B: Peel strength of not less than 8 N/m and less than 10 N/m
C: Peel strength of not less than 4 N/m and less than 8 N/m
D: Peel strength of less than 4 N/m
A larger value indicates better adhesion to a substrate.

(8) Peel strength of separator coating layer

A test specimen having a rectangular shape of 100 mm in length by 10 mm in width was cut out from a separator coated with a functional layer. Cellophane tape (tape prescribed by JIS Z1522) was fixed to a test stage in advance. The obtained test specimen was affixed to the cellophane tape with the functional layer of the separator facing downward, and then one end of the separator was pulled in a perpendicular direction at a pulling speed of 100 mm/min to peel off the separator, and the stress during this peeling was measured. Three measurements were made in this manner. The average value of these measurements was taken to be the peel strength of a separator coating layer and was evaluated by the following standard.

A: Peel strength of 100 N/m or more
B: Peel strength of not less than 80 N/m and less than 100 N/m
C: Peel strength of not less than 60 N/m and less than 80 N/m
D: Peel strength of less than 60 N/m
A larger value indicates better adhesion to a substrate.

(9) Cycle characteristics of secondary battery

A laminate cell-type lithium ion secondary battery was left at rest in an environment having a temperature of 25°C for 24 hours after injection of electrolyte solution. The lithium ion secondary battery was then subjected to a charge/discharge operation of charging to a cell voltage of 4.35 V and discharging to a cell voltage of 3.0 V by a 0.1C constant-current method, and the initial capacity $C_0$ thereof was measured.

Next, the lithium ion secondary battery was repeatedly charged and discharged through charging to a cell voltage of 4.35 V by a 1.0C constant-current method and discharging to a cell voltage of 3.0 V by the same constant-current method as in the charging mode in an environment having a temperature of 45°C, and the capacity $C_2$ after 100 cycles was measured.

A capacity maintenance rate $C_3$ was determined by the following formula from the capacity $C_0$ and the capacity $C_2$.

$$C_3 \ (\%) = (C_2/C_0) \times 100$$

A: Capacity maintenance rate $C_3$ of 95% or more
B: Capacity maintenance rate $C_3$ of not less than 90% and less than 95%
C: Capacity maintenance rate $C_3$ of not less than 80% and less than 90%
D: Capacity maintenance rate $C_3$ of less than 80%
A larger value indicates better cycle characteristics.

(10) Post-cycling test peel test

A cell that had undergone testing in "(9) Cycle characteristics of secondary battery" described above was disassembled inside a glove box to collect an electrode (negative electrode or positive electrode). The collected electrode was immersed in a solvent (mixed solvent of ethylene carbonate (EC)/ethyl methyl carbonate (EMC) = 30/70 (volume ratio)) for 10 minutes with the entire electrode mixed material layer in contact with the solvent and was then immersed in ethyl methyl carbonate for 10 minutes in the same manner. After immersion, the electrode was removed and was dried in a draft inside a dry room for 2 hours.

A test specimen having a rectangular shape of 100 mm in length by 10 mm in width was cut out from the obtained electrode (negative electrode or positive electrode). The test specimen was fixed to a test stage with the electrode mixed material layer surface facing upward. Cellophane tape (tape prescribed by JIS Z1522) was affixed to the surface of the electrode mixed material layer of the test specimen that had been fixed in place, and then the cellophane tape was peeled off from one end of the test specimen in a direction at 180° and at a speed of 50 mm/min, and the stress during this peeling was measured. Five measurements were made in this manner. The average value of these measurements was taken to be the peel strength and was judged by the following standard.
Standard for electrode (positive electrode or negative electrode) peel strength

A: Peel strength of 4 N/m or more
B: Peel strength of not less than 3 N/m and less than 4 N/m
C: Peel strength of not less than 2 N/m and less than 3 N/m
D: Peel strength of less than 2 N/m

In the case of a separator, the separator was collected from a cell after testing of cycle characteristics, a test specimen was produced in the same manner as described above, and stress measurement was performed in the same manner as in testing of "(8) Peel strength of separator coating layer".
Standard for separator peel strength

A: Peel strength of 40 N/m or more

B: Peel strength of not less than 15 N/m and less than 40 N/m
C: Peel strength of not less than 5 N/m and less than 15 N/m
D: Peel strength of less than 5 N/m
A larger value indicates better adhesion to a substrate.

(11) Lithium metal deposition test

A laminate cell-type lithium ion secondary battery was left at rest in an environment having a temperature of 25°C for 24 hours after injection of electrolyte solution, and was then subjected to a charge/discharge operation of charging to a cell voltage of 4.35 V and discharging to a cell voltage of 2.75 V by a 0.1C constant-current method.

Next, a charge/discharge operation of charging to a cell voltage of 4.35 V by a 1.5C constant-current method (CCCV charging with 0.05C cut-off) and discharging (CC discharging) to a cell voltage of 2.75 V at the same rate was repeated 5 times in an environment having a temperature of -10°C. Finally, the lithium ion secondary battery was charged to a cell voltage of 4.35 V by a 0.2C constant-current method in an environment having a temperature of 25°C.

A cell of the lithium ion secondary battery that had undergone the operations described above was disassembled in order to remove the negative electrode. The proportion of the entire surface of the negative electrode that was occupied by sections where lithium metal had deposited (Li metal deposition sections) was calculated by image processing. Li metal deposition sections were judged based on the color of the electrode surface. Specifically, with regards to the negative electrode at a positive electrode opposing surface section, a section having a gray to black color was judged to be a Li metal deposition section, whereas a golden section was judged to be a non-deposition section.

A: Proportion occupied by Li metal deposition sections is less than 3% of entire negative electrode surface
B: Proportion occupied by Li metal deposition sections is not less than 3% and less than 10% of entire negative electrode surface
C: Proportion occupied by Li metal deposition sections is not less than 10% and less than 30% of entire negative electrode surface
D: Proportion occupied by Li metal deposition sections is 30% or more of entire negative electrode surface
A smaller proportion indicates that deposition of lithium metal at the negative electrode of the lithium ion secondary battery is inhibited.

<Example 1>

A binder composition, a negative electrode, a separator, and a secondary battery of Example 1 were produced as follows.

[Production of core portion polymer]

A 5 MPa pressure-resistant vessel A equipped with a stirrer was charged with 33 parts of methyl methacrylate, 33 parts of n-butyl acrylate (butyl acrylate in Table 1), 31 parts of 1,3-butadiene (butadiene in Table 1), 3 parts of methacrylic acid, 2 parts of sodium lauryl sulfate as an emulsifier, 400 parts of deionized water, 0.5 parts of t-dodecyl mercaptan as a chain transfer agent, and 1.0 parts of ammonium persulfate as a polymerization initiator. These materials were thoroughly stirred, were then heated to a temperature of 55°C to initiate polymerization, and were reacted for 4 hours. Thereafter, the temperature was raised to 70°C, and a further 4 hours of reaction was performed to yield a core portion polymer. Measurement of the amount of THF-insoluble content was performed using a solution of this core portion polymer.

[Production of mixture for shell portion polymer production]

A 5 MPa pressure-resistant vessel B equipped with a stirrer was charged with 0.35 parts of sodium lauryl sulfate as an emulsifier and 67 parts of deionized water. In addition, 15 parts of ethyl acrylate and 14.6 parts of n-butyl acrylate (butyl acrylate in Table 1) as monofunctional unsaturated carboxylic acid ester monomers, 12.9 parts of methacrylic acid as a monofunctional unsaturated carboxylic acid monomer, 0.43 parts of ethylene glycol dimethacrylate as a monomer including at least two vinyl functional groups, and 0.1 parts of t-dodecyl mercaptan as a chain transfer agent were added and were stirred therewith at a temperature of 25°C for 30 minutes to obtain a mixture for shell portion polymer production. Note that a solution of a polymer of the shell portion by itself used in measurement of the weight-average molecular weight of the shell portion was obtained by adding 0.5 parts of ammonium persulfate as a polymerization initiator to this mixture without the core portion, carrying out polymerization at a temperature of 75°C for 3 hours, and subsequently performing adjustment to pH 8 through addition of 5% sodium hydroxide aqueous solution.

[Production of binder composition containing core-shell particles]

After reaction of the core portion polymer, the 5 MPa pressure-resistant vessel A equipped with a stirrer was heated to a temperature of 75°C. The mixture for shell portion polymer production obtained as described above was added into the pressure-resistant vessel A over 3 hours, and, simultaneously thereto, addition of 0.5 parts of ammonium persulfate as a polymerization initiator into the pressure-resistant vessel A was started so as to initiate shell portion polymerization.

Addition of the total amount of the mixture was complete once 3 hours had passed from the start of shell portion polymerization. Thereafter, the temperature was further raised to 85°C, the reaction was continued for 4 hours, and then cooling was performed to quench the reaction. The polymerization conversion rate at this point was 97%. A solution of this reaction product was used as a post-polymerization solution that had not been neutralized in measurement of the viscosity ratio of a binder composition before and after neutralization.

The solution of the reaction product was adjusted from pH 2.5 to pH 8.0 through addition of 5% sodium hydroxide aqueous solution. Measurement of viscosity after neutralization in measurement of the viscosity ratio of a binder composition before and after neutralization was performed with respect to a solution obtained by adjusting this solution of the reaction product to a solid content concentration of 10%.

Unreacted monomer was subsequently removed through thermal-vacuum distillation. Cooling was then performed to obtain a binder composition.

The obtained binder composition contained core-shell particles. Moreover, the monomer chemical compositions of the core portion and the shell portion of these core-shell particles were as shown below, and were substantially the same as the monomer unit chemical compositions in the polymers.

Among 100% of core portion monomers, methyl methacrylate was 33%, n-butyl acrylate was 33%, 1,3-butadiene was 31%, and methacrylic acid was 3%.

Among 100% of shell portion monomers, ethyl acrylate was 35%, n-butyl acrylate was 34%, methacrylic acid was 30%, and ethylene glycol dimethacrylate was 1%.

The ratio of the mass of the core portion and the mass of the shell portion (mass of core portion/mass of shell portion) was 70/30.

<Production of slurry composition for secondary battery>

A planetary mixer was charged with 98 parts of artificial graphite (volume-average particle diameter: 25 $\mu$m) having a specific surface area of 3.5 $m^2$/g as an electrode active material and 1.0 parts in terms of solid content of carboxymethyl cellulose sodium (degree of etherification: 1.0; aqueous solution viscosity at solid content concentration of 1.0%: 2,500 mPa.s). These materials were adjusted to a solid content concentration of 58% with deionized water and were then mixed at room temperature (25°C) and 45 rpm for 60 minutes. Next, dilution was performed in two stages to solid content concentrations of 53% and 50% with deionized water (each with 15 minutes of mixing at 45 rpm). In addition, 1.0 parts in terms of solid content of the binder composition was added and was mixed therewith at 45 rpm for 15 minutes.

The resultant mixture was subjected to 3 minutes of defoaming at 10 rpm under depressurization to a gauge pressure of -0.09 MPa or lower so as to obtain a slurry composition for a secondary battery. The obtained slurry composition had excellent fluidity. This slurry composition for a secondary battery was used in testing of slurry composition foaming.

[Negative electrode (production using presently disclosed slurry composition for secondary battery)]

The slurry composition for a secondary battery was applied onto copper foil (current collector) of 18 $\mu$m in thickness by a comma coater such as to have a thickness after drying of 105 $\mu$m and a coating weight of 10 mg/$cm^2$. The copper foil having the composition applied thereon was conveyed inside an oven having a temperature of 75°C for 2 minutes and an oven having a temperature of 120°C for 2 minutes at a speed of 0.5 m/min so as to dry the composition on the copper foil and thereby obtain a negative electrode web. The negative electrode web was rolled by roll pressing to obtain a negative electrode including a negative electrode mixed material layer of 80 $\mu$m in thickness.

[Production of secondary battery]

A planetary mixer was used to mix 95 parts of LiCoO$_2$ having a spinel structure as a positive electrode active material, 3 parts in terms of solid content of PVDF (polyvinylidene fluoride) as a binder for a positive electrode mixed material layer, 2 parts of acetylene black as a conductive material, and 20 parts of N-methylpyrrolidone as a solvent.

The resultant composition was applied onto aluminum foil (current collector) of 20 $\mu$m in thickness by a comma coater such as to have a thickness after drying of approximately 100 $\mu$m. The aluminum foil having the composition applied thereon was conveyed inside an oven having a temperature of 60°C for 2 minutes and an oven having a temperature of 120°C for 2 minutes at a speed of 0.5 m/min so as to dry the composition on the aluminum foil and thereby obtain a positive electrode web. The positive electrode web was rolled by roll pressing to obtain a positive electrode including a positive electrode mixed material layer of 70 μm in thickness. The obtained positive electrode was used in production of a secondary battery.

A square of 5 cm × 5 cm was cut out from a separator made of a single layer of polypropylene (width: 65 mm; length: 500 mm; thickness: 25 μm; produced by dry method; porosity: 55%) and was used in production of a secondary battery.

An aluminum packing case was prepared as a battery case. A square of 4 cm × 4 cm was cut out from the positive electrode and was arranged such that the surface at the current collector-side thereof was in contact with the aluminum packing case. Next, the square separator described above was arranged on the surface of the positive electrode mixed material layer of the positive electrode. In addition, a square of 4.2 cm × 4.2 cm was cut out from the negative electrode and was arranged on the separator such that the surface at the negative electrode mixed material layer-side thereof was facing the separator. Next, an LiPF$_6$ solution of 1.0 M in concentration (solvent: mixed solvent of ethylene carbonate (EC)/ethyl methyl carbonate (EMC) = 30/70 (volume ratio); additive: containing 2 volume% (solvent ratio) of vinylene carbonate) was loaded as an electrolyte solution. The aluminum packing case was then closed by heat sealing at 150°C to tightly seal an opening of the aluminum packing and thereby produce a laminate cell-type lithium ion secondary battery.

<Examples 2 to 11 and 26, and Comparative Examples 1 to 8>

A binder composition, a slurry composition for a secondary battery, a negative electrode, and a secondary battery were produced in the same way as in Example 1 with the exception that the chemical composition ratio and types of shell portion monomers in production of the shell portion were changed as indicated in Table 1. Various evaluations were performed in the same way as in Example 1. Note that ethoxylated pentaerythritol tetraacrylate used in Example 9 and Comparative Example 8 was ATM35E (product name) produced by SHINNIHON CHEMICALS Corporation.

<Examples 12 and 13>

A binder composition, a slurry composition for a secondary battery, a negative electrode, and a secondary battery were produced in the same way as in Example 1 with the exception that the amount (0.5 parts) of t-dodecyl mercaptan used as a chain transfer agent in production of the core portion was changed to 0.9 parts in Example 12 and was changed to 0.05 parts in Example 13. Various evaluations were performed in the same way as in Example 1.

<Examples 14 to 17 and Comparative Examples 9 and 10>

A binder composition, a slurry composition for a secondary battery, a negative electrode, and a secondary battery were produced in the same way as in Example 1 with the exception that the charged amounts of the core portion and the shell portion were adjusted so as to change the ratio of the mass of the core portion relative to the mass of the shell portion (mass of core portion/mass of shell portion) as indicated in Table 1. Various evaluations were performed in the same way as in Example 1.

<Examples 18 to 20>

A slurry composition for a secondary battery, a negative electrode, and a secondary battery were produced in the same way as in Example 1 with the exception that an SBR binder was blended with the binder composition of Example 1 in a mass ratio indicated in Table 1 (amount in terms of solid content of binders in binder composition kept the same as in Example 1). Various evaluations were performed in the same way as in Example 1.

The used SBR binder was produced as described below.

A 5 MPa pressure-resistant vessel A equipped with a stirrer was charged with 3.15 parts of styrene, 1.66 parts of 1,3-butadiene, 0.19 parts of itaconic acid, 0.2 parts of sodium lauryl sulfate as an emulsifier, 20 parts of deionized water, and 0.03 parts of potassium persulfate as a polymerization initiator. These materials were thoroughly stirred, were then heated to a temperature of 60°C to initiate polymerization, and were reacted for 6 hours to yield seed particles.

After this reaction, the temperature was raised to 75°C, addition of a mixture of 58.85 parts of styrene as an aromatic-containing monomer, 33.34 parts of 1,3-butadiene as an aliphatic conjugated diene monomer, 0.81 parts of itaconic acid as another monomer, 1 part of methyl methacrylate as a (meth)acrylic acid ester monomer (other monomer), 0.25 parts of t-dodecyl mercaptan as a chain transfer agent, and 0.35 parts of sodium lauryl sulfate as an emulsifier from a separate vessel B to the pressure-resistant vessel A was started, and, simultaneously thereto, addition of 1 part of potassium persulfate as a polymerization initiator into the pressure-resistant vessel A was started so as to initiate a second stage of polymerization.

Once 4 hours had passed from the start of the second stage of polymerization (once 70% of the overall monomer composition had been added), 1 part of 2-hydroxyethyl acrylate as another monomer was added into the pressure-resistant vessel A over 1.5 hours.

In other words, the overall monomer composition was 62 parts of styrene, 35 parts of 1,3-butadiene, 1 part of itaconic acid, 1 part of 2-hydroxyethyl acrylate, and 1 part of methyl methacrylate as another monomer.

Addition of the total amount of a mixture containing these monomer compositions was complete once 5.5 hours had passed from the start of the second stage of polymerization. Thereafter, the temperature was further raised to 85°C and the reaction was continued for 6 hours.

At the point at which the polymerization conversion rate reached 97%, cooling was performed to quench the reaction. The mixture containing this polymerized product was adjusted to pH 8 through addition of 5% sodium hydroxide aqueous solution. Unreacted monomer was subsequently removed through thermal-vacuum distillation. Cooling was then further performed to obtain the SBR binder.

<Example 21>

A slurry for a secondary battery, a negative electrode, and a secondary battery were produced in the same way as in Example 1 with the exception that an SBS binder was blended with the binder composition of Example 1 in a mass ratio indicated in Table 1 (amount in terms of solid content of binders in binder composition kept the same as in Example 1). Various evaluations were performed in the same way as in Example 1.

The used SBS binder was produced as described below.

[Production of cyclohexane solution of block polymer]

A pressure-resistant reactor was charged with 233.3 kg of cyclohexane, 54.2 mmol of N,N,N',N'-tetramethylethylenediamine (hereinafter, referred to as "TMEDA"), and 30.0 kg of styrene as an aromatic vinyl monomer. These materials were stirred at a temperature of 40°C while 1806.5 mmol of n-butyllithium as a polymerization initiator was added thereto and were then polymerized for 1 hour under heating to a temperature of 50°C. The polymerization conversion rate of styrene was 100%.

Next, 70.0 kg of 1,3-butadiene as an aliphatic conjugated diene monomer was continuously added into the pressure-resistant reactor over 1 hour while performing temperature control to maintain a temperature of 50°C to 60°C. The polymerization reaction was continued for 1 hour after addition of the 1,3-butadiene was complete. The polymerization conversion rate of 1,3-butadiene was 100%.

Next, 722.6 mmol of dichlorodimethylsilane as a coupling agent was added into the pressure-resistant reactor and a coupling reaction was carried out for 2 hours to form a styrene-butadiene coupled block copolymer.

Thereafter, 3612.9 mmol of methanol was added to the reaction liquid and was thoroughly mixed therewith to deactivate active terminals.

Next, 0.05 parts of 4-[[4,6-bis(octylthio)-1,3,5-triazin-2-yl]amino]-2,6-di-tert-butylphenol (HI) as a hindered phenol antioxidant and 0.09 parts of 3,9-bis(octadecyloxy)-2,4,8,10-tetraoxa-3,9-diphosphaspiro[5.5]undecane (PI) as a phosphite antioxidant were added to 100 parts of the reaction liquid (containing 30.0 parts of polymer component) and were mixed therewith.

The obtained mixed solution was gradually added dropwise into hot water having a temperature of 85°C to 95°C so as to volatilize solvent and obtain a precipitate. This precipitate was pulverized and was then hot-air dried at a temperature of 85°C to collect a dried product containing a block polymer.

The collected dried product was dissolved in cyclohexane to produce a block polymer solution having a block polymer concentration of 5.0%.

[Phase-inversion emulsification]

Sodium alkylbenzene sulfonate was dissolved in deionized water to produce a 0.15% aqueous solution. After loading 1,400 g of the obtained aqueous solution and 1,000 g of the block polymer solution obtained as described above into a tank, these materials were stirred to perform preliminary mixing. Next, the preliminary mixture was transferred from the tank to a highpressure emulsifying/dispersing device "LAB 1000" (produced by SPX FLOW, Inc.) using a metering pump and was circulated (number of passes: 5) so as to obtain an emulsion in which the preliminary mixture had undergone phase-inversion emulsification.

Next, cyclohexane in the obtained emulsion was evaporated under reduced pressure in a rotary evaporator. The emulsion that had been subjected to evaporation was subsequently subjected to 10 minutes of centrifugation at 7,000 rpm in a centrifuge (produced by Hitachi Koki Co., Ltd.; product name: Himac CR21N), and then the upper layer portion was withdrawn to perform concentration.

Finally, the upper layer portion was filtered through a 100-mesh screen to obtain a water dispersion (block polymer latex) containing a particulate block polymer.

[Graft polymerization and cross-linking]

Distilled water was added to dilute the obtained block polymer latex such that the amount of water was 850 parts relative to 100 parts (in terms of solid content) of the particulate block polymer. The diluted block polymer latex was loaded into a stirrer-equipped polymerization reactor that had undergone nitrogen purging and was heated to a temperature of 30°C under stirring. In addition, a separate vessel was used to produce a diluted methacrylic acid solution by mixing 4 parts of methacrylic acid as an acidic group-containing monomer and 15 parts of distilled water. The diluted methacrylic acid solution was added over 30 minutes into the polymerization reactor that had been heated to 30°C so as to add 4 parts of methacrylic acid relative to 100 parts of the block polymer.

A separate vessel was used to produce a solution (g) containing 7 parts of distilled water and 0.01 parts of ferrous sulfate (produced by Chubu Chelest Co., Ltd.; product name: FROST Fe) as a reductant. The obtained solution was added into the polymerization reactor, 0.5 parts of 1,1,3,3-tetramethylbutyl hydroperoxide (produced by NOF Corporation; product name: PEROCTA H) as an oxidant was subsequently added, and a reaction was carried out at a temperature of 30°C for 1 hour and then at a temperature of 70°C for 2 hours to obtain a reaction product. The polymerization conversion rate was 99%. This reaction product was used as the SBS binder.

<Example 22>

A binder composition, a slurry composition for a secondary battery, a negative electrode, and a secondary battery were produced in the same way as in Example 1 with the exception that the thickener used in production of the slurry composition for a secondary battery was changed from carboxymethyl cellulose sodium to a lithium salt of an acrylic acid/acrylamide/hydroxyethyl acrylamide copolymer. Various evaluations were performed in the same way as in Example 1. The used lithium salt of an acrylic acid/acrylamide/hydroxyethyl acrylamide copolymer was produced as described below.

[Production of lithium salt of acrylic acid/acrylamide/hydroxyethyl acrylamide copolymer]

A 1 L flask made of glass was charged with 789 parts of deionized water, this deionized water was heated to a temperature of 40°C, and the inside of the flask was purged with nitrogen gas at a flow rate of 100 mL/min. Next, 45 parts of acrylamide, 25 parts of acrylic acid, and 30 parts of hydroxyethyl acrylamide were mixed and were then injected into the flask. Thereafter, 8.9 parts of a 2.5% aqueous solution of potassium persulfate as a polymerization initiator was added into the flask by a syringe. Once 15 minutes had passed from addition of the polymerization initiator, 22.2 parts of a 2.0% aqueous solution of tetramethylethylenediamine as a polymerization accelerator was added by a syringe to initiate a polymerization reaction.

Once 4 hours had passed from addition of the polymerization initiator, 4.4 parts of a 2.5% aqueous solution of potassium persulfate as a polymerization initiator was supplemented into the flask, 11.1 parts of a 2.0% aqueous solution of tetramethylethylenediamine as a polymerization accelerator was further supplemented into the flask, and the temperature was raised to 60°C and was maintained thereat while causing the polymerization reaction to proceed. Once 3 hours had passed from supplementing of the polymerization initiator, the flask was opened to air, the polymerization reaction was ended, and an 8% aqueous solution of lithium hydroxide was added to the obtained polymer so as to perform adjustment to pH 8.0 under stirring at a temperature of 80°C for 6 hours and thereby yield a lithium salt of a hydroxyethyl acrylamide-acrylic acid-acrylamide copolymer as a thickener.

<Example 23>

A binder composition, a slurry composition for a secondary battery, a negative electrode, and a secondary battery were produced in the same way as in Example 1 with the exception that the SBR binder used in Example 18 was used as a solution of a core portion polymer and that the chemical composition ratio and types of shell portion monomers were changed as indicated in Table 1. Various evaluations were performed in the same way as in Example 1.

<Example 24>

A binder composition, a slurry composition for a secondary battery, a negative electrode, and a secondary battery were produced in the same way as in Example 1 with the exception that the reaction product at a stage before "Graft polymerization and cross-linking" of the SBS binder used in Example 21 was used as a solution of a core portion polymer and that the chemical composition ratio and types among 100 parts of shell portion monomers were changed as indicated in Table 1. Various evaluations were performed in the same way as in Example 1.

<Example 25>

A binder composition, a slurry composition for a secondary battery, a negative electrode, and a secondary battery were produced in the same way as in Example 1 with the exception that the active material used in production of the slurry composition for a secondary battery was changed from graphite to a graphite-silicon active material (mass of graphite:mass of silicon-based active material $SiO_x$ = 70/30) and that the thickener was changed from carboxymethyl cellulose sodium to a lithium salt of an acrylic acid/acrylamide/hydroxyethyl acrylamide copolymer (same as used in Example 22). Various evaluations were performed in the same way as in Example 1.

<Example 27>

The binder composition produced in Example 1 was used to produce a slurry composition for a porous membrane layer and a separator including a porous membrane layer as described below. A secondary battery was then produced in the same way as in Example 1 with the exception that this separator including a porous membrane was used. Various evaluations were performed in the same way as in Example 1.

[Production of slurry composition for porous membrane layer]

A mixture was obtained by mixing 100 parts of alumina (volume-average particle diameter: 0.5 $\mu$m) as non-conductive particles, 1.0 parts of ammonium polycarboxylate (produced by Toagosei Co., Ltd.; product name: Aron A-6114) as a dispersant, and water. The amount of water was adjusted such that the solid content concentration was 50%. The mixture was processed using a media-less dispersing device to disperse the alumina and obtain a dispersion liquid.
Carboxymethyl cellulose sodium (degree of etherification: 1.0; aqueous solution viscosity at solid content concentration of 1.0%: 500 mPa·s) was added in an amount of 2.0 parts to the obtained dispersion liquid and was mixed therewith. The added carboxymethyl cellulose sodium salt dissolved in the mixture.
Next, 5.0 parts (in terms of solid content) of the binder composition of Example 1 and 0.2 parts of an aliphatic polyether nonionic surfactant as a wetting agent were added to the mixture, and then water was further added to adjust the solid content concentration to 40% and thereby obtain a slurry composition for a porous membrane layer.

[Production of separator including porous membrane layer]

A separator substrate made of a single layer of polypropylene (width: 250 mm; length: 1,000 m; thickness: 12 $\mu$m) that had been produced by a wet method was prepared. The slurry composition for a porous membrane layer was redispersed and was then applied onto both sides of the separator substrate by a gravure coater (coating rate: 20 m/min) such as to have a thickness after drying of 2.5 $\mu$m. Next, the separator substrate having the slurry composition for a porous membrane layer applied thereon was dried in a drying furnace at a temperature of 50°C and was wound up so as to produce a separator including porous membrane layers at both sides of the separator substrate. A square of 5 cm $\times$ 5 cm was cut out from this separator and was used in production of a secondary battery.
The test specimen used in measurement of peel strength of a separator coating layer was obtained by producing a separator including a porous membrane layer at one side in the same way as described above with the exception that the slurry composition for a porous membrane layer was only applied onto one side of the separator substrate.

<Example 28>

The binder composition produced in Example 1 was used to produce a positive electrode slurry composition as described below. A negative electrode slurry composition was produced in the same way as the slurry composition for a secondary battery described in Example 1 with the exception that the SBR binder described in Examples 18 to 20 was used as a binder composition. A secondary battery was then produced in the same way as in Example 1 with the exception that the positive electrode slurry composition and the negative electrode slurry composition described above were used. Various evaluations were performed in the same way as in Example 1.

[Production of slurry composition for positive electrode]

A powder was prepared by dry mixing 100 parts of carbon-coated lithium iron phosphate and 10 parts of acetylene black as conductive carbon in a tightly sealed vessel. A premix paste was then produced by adding 100 parts of an aqueous solution of 2% carboxymethyl cellulose sodium (degree of etherification: 1.0; aqueous solution viscosity at solid content concentration of 1.0%: 500 mPa·s) as a water-soluble thickener to the powder and performing thorough mixing thereof using a planetary mixer. The obtained premix paste was subjected to dispersing in a bead mill in which zirconia beads of 1 mm in diameter were used, and then 3 parts (in terms of solid content) of the binder composition of Example 1 was added and thoroughly mixed therewith to obtain a slurry composition for a positive electrode.

[Production of positive electrode (using slurry composition for positive electrode)]

The obtained slurry composition for a positive electrode was applied onto a pure aluminum foil current collector by a film applicator such as to have a thickness of 120 μm and was thoroughly dried inside a hot-air dryer. The drying conditions were 10 minutes inside the hot-air dryer under an atmosphere having a temperature of 50°C. The dry weight was 10 mg/cm$^2$.

<Comparative Example 11>

A binder composition, a slurry composition for a secondary battery, a negative electrode, and a secondary battery were produced in the same way as in Example 1 with the exception that the charged amount of the shell portion was set as indicated in Table 1 and the amount of t-dodecyl mercaptan as a chain transfer agent in production of the shell portion (0.1 parts in Example 1) was changed to 3.5 parts. Various evaluations were performed in the same way as in Example 1.

<Comparative Example 12>

A binder composition, a slurry composition for a secondary battery, a negative electrode, and a secondary battery were produced in the same way as in Example 1 with the exception that the charged amount of the shell portion was set as indicated in Table 1, the amount of t-dodecyl mercaptan as a chain transfer agent in production of the shell portion (0.1 parts in Example 1) was changed to 0 parts, and the amount of ammonium persulfate as a polymerization initiator in shell portion polymerization (0.5 parts in Example 1) was changed to 0.1 parts. Various evaluations were performed in the same way as in Example 1. Various evaluations were performed in the same way as in Example 1.

Table 1

| | | Example 1 | Example 2 | Example 3 | Example 4 | Example 5 |
|---|---|---|---|---|---|---|
| Core portion | Unsaturated carboxylic acid ester monomer | Methyl methacrylate | Methyl methacrylate | Methyl methacrylate | Methyl methacrylate | Methyl methacrylate |
| | | 33.0 | 33.0 | 33.0 | 33.0 | 33.0 |
| | | Butyl acrylate | Butyl acrylate | Butyl acrylate | Butyl acrylate | Butyl acrylate |
| | | 33.0 | 33.0 | 33.0 | 33.0 | 33.0 |
| | Unsaturated carboxylic acid monomer | Methacrylic acid | Methacrylic acid | Methacrylic acid | Methacrylic acid | Methacrylic acid |
| | | 3.0 | 3.0 | 3.0 | 3.0 | 3.0 |
| | Other monomer | Butadiene | Butadiene | Butadiene | Butadiene | Butadiene |
| | | 31.0 | 31.0 | 31.0 | 31.0 | 31.0 |
| | Total | 100.0 | 100.0 | 100.0 | 100.0 | 100.0 |
| Shell portion | Monofunctional unsaturated carboxylic acid ester monomer | Ethyl acrylate | Ethyl acrylate | Ethyl acrylate | Ethyl acrylate | Ethyl acrylate |
| | | 35.0 | 45.0 | 42.0 | 30.0 | 33.0 |
| | | Butyl acrylate | Butyl acrylate | Butyl acrylate | Butyl acrylate | Butyl acrylate |
| | | 34.0 | 44.0 | 41.0 | 20.0 | 30.0 |
| | Total | 69.0 | 89.0 | 83.0 | 50.0 | 63.0 |
| | Monofunctional unsaturated carboxylic acid and/or sulfonic acid monomer | Methacrylic acid | Methacrylic acid | Methacrylic acid | Methacrylic acid | Methacrylic acid |
| | | 30.0 | 10.0 | 16.0 | 49.0 | 27.0 |
| | Monomer including at least two vinyl functional groups | Ethylene glycol dimethacrylate | Ethylene glycol dimethacrylate | Ethylene glycol dimethacrylate | Ethylene glycol dimethacrylate | Ethylene glycol dimethacrylate |
| | | 1.0 | 1.0 | 1.0 | 1.0 | 10.0 |
| | Aromatic vinyl monomer | - | - | - | - | - |
| | | - | - | - | - | - |
| Number of moles of monofunctional unsaturated carboxylic acid and/or sulfonic acid monomer per 1 mol of monomer including at least two vinyl functional groups | | 69.1 | 23.0 | 36.9 | 112.9 | 6.2 |
| Amount of THF-insoluble content in core portion polymer | | 85 | 85 | 85 | 85 | 85 |
| Weight-average molecular weight of shell portion | | 2,000,000 | 2,000,000 | 2,000,000 | 2,000,000 | 200,000 |
| Amount of electrolyte solution-insoluble content in binder composition | | 80 | 75 | 75 | 85 | 95 |
| Viscosity ratio of binder composition before and after neutralization | | 3 times | 3 times | 3 times | 3 times | 2 times |
| Core portion mass/Shell portion mass | | 70/30 | 70/30 | 70/30 | 70/30 | 70/30 |
| Radius of gyration of core-shell particles | | 200 nm | 150 nm | 180 nm | 200 nm | 60 nm |
| Functional particles in slurry | | Graphite | Graphite | Graphite | Graphite | Graphite |
| Thickener in slurry | | CMC | CMC | CMC | CMC | CMC |
| Binder composition | | Example 1 | Example 2 | Example 3 | Example 4 | Example 5 |
| Functional layer | | Negative electrode | Negative electrode | Negative electrode | Negative electrode | Negative electrode |
| Evaluation | Foaming of slurry composition | A | A | A | B | A |
| | Peel strength of electrode or separator coating layer | A | B | B | A | B |
| | Cycle characteristics | A | A | A | A | A |
| | Peel strength after cycle characteristics test | A | A | A | A | B |
| | Lithium metal deposition test | A | B | A | B | A |

* Number under each monomer indicates charged amount (parts)

Table 1
(contd.)

| | | | Example 6 | Example 7 | Example 8 | Example 9 | Example 10 |
|---|---|---|---|---|---|---|---|
| Core portion | Unsaturated carboxylic acid ester monomer | | Methyl methacrylate | Methyl methacrylate | Methyl methacrylate | Methyl methacrylate | Methyl methacrylate |
| | | | 33.0 | 33.0 | 33.0 | 33.0 | 33.0 |
| | | | Butyl acrylate | Butyl acrylate | Butyl acrylate | Butyl acrylate | Butyl acrylate |
| | | | 33.0 | 33.0 | 33.0 | 33.0 | 33.0 |
| | Unsaturated carboxylic acid monomer | | Methacrylic acid | Methacrylic acid | Methacrylic acid | Methacrylic acid | Methacrylic acid |
| | | | 3.0 | 3.0 | 3.0 | 3.0 | 3.0 |
| | Other monomer | | Butadiene | Butadiene | Butadiene | Butadiene | Butadiene |
| | | | 31.0 | 31.0 | 31.0 | 31.0 | 31.0 |
| | Total | | 100.0 | 100.0 | 100.0 | 100.0 | 100.0 |
| Shell portion | Monofunctional unsaturated carboxylic acid ester monomer | | Ethyl acrylate | Ethyl acrylate | Ethyl acrylate | Ethyl acrylate | Ethyl acrylate |
| | | | 35.0 | 34.0 | 40.0 | 30.0 | 40.0 |
| | | | Butyl acrylate | Butyl acrylate | Butyl acrylate | Butyl acrylate | Butyl acrylate |
| | | | 34.0 | 30.0 | 40.0 | 20.0 | 40.0 |
| | Total | | 69.0 | 64.0 | 80.0 | 50.0 | 80.0 |
| | Monofunctional unsaturated carboxylic acid and/or sulfonic acid monomer | | Methacrylic acid | Methacrylic acid | Styrene sulfonic acid | Acrylic acid | Methacrylic acid |
| | | | 30.9 | 30.0 | 10.0 | 49.9 | 10.0 |
| | Monomer including at least two vinyl functional groups | | Ethylene glycol dimethacrylate | Ethylene glycol dimethacrylate | Butadiene | Ethoxylated pentaerythritol tetraacrylate | Ethylene glycol dimethacrylate |
| | | | 0.1 | 1.0 | 10.0 | 0.1 | 10.0 |
| | Aromatic vinyl monomer | | - | Styrene | - | - | - |
| | | | - | 5.0 | - | - | - |
| Number of moles of monofunctional unsaturated carboxylic acid and/or sulfonic acid monomer per 1 mol of monomer including at least two vinyl functional groups | | | 711.7 | 69.1 | 0.3 | 13,101.7 | 2.3 |
| Amount of THF-insoluble content in core portion polymer | | | 85 | 85 | 85 | 85 | 85 |
| Weight-average molecular weight of shell portion | | | 4,500,000 | 2,000,000 | 200,000 | 4,500,000 | 10,000 |
| Amount of electrolyte solution-insoluble content in binder composition | | | 50 | 90 | 95 | 50 | 80 |
| Viscosity ratio of binder composition before and after neutralization | | | 6 times | 3 times | 1.6 times | 6 times | 1.5 times |
| Core portion mass/Shell portion mass | | | 70/30 | 70/30 | 70/30 | 70/30 | 70/30 |
| Radius of gyration of core-shell particles | | | 350 nm | 180 nm | 50 nm | 450 nm | 10 nm |
| Functional particles in slurry | | | Graphite | Graphite | Graphite | Graphite | Graphite |
| Thickener in slurry | | | CMC | CMC | CMC | CMC | CMC |
| Binder composition | | | Example 6 | Example 7 | Example 8 | Example 9 | Example 10 |
| Functional layer | | | Negative electrode | Negative electrode | Negative electrode | Negative electrode | Negative electrode |
| Evaluation | Foaming of slurry composition | | A | B | A | B | A |
| | Peel strength of electrode or separator coating layer | | A | B | B | B | B |
| | Cycle characteristics | | A | A | A | A | A |
| | Peel strength after cycle characteristics test | | B | A | B | B | B |
| | Lithium metal deposition test | | B | A | A | B | A |

* Number under each monomer indicates charged amount (parts)

Table 1
(contd.)

| | | | Example 11 | Example 12 | Example 13 | Example 14 | Example 15 |
|---|---|---|---|---|---|---|---|
| Core portion | Unsaturated carboxylic acid ester monomer | | Methyl methacrylate | Methyl methacrylate | Methyl methacrylate | Methyl methacrylate | Methyl methacrylate |
| | | | 33.0 | 33.0 | 33.0 | 33.0 | 33.0 |
| | | | Butyl acrylate | Butyl acrylate | Butyl acrylate | Butyl acrylate | Butyl acrylate |
| | | | 33.0 | 33.0 | 33.0 | 33.0 | 33.0 |
| | Unsaturated carboxylic acid monomer | | Methacrylic acid | Methacrylic acid | Methacrylic acid | Methacrylic acid | Methacrylic acid |
| | | | 3.0 | 3.0 | 3.0 | 3.0 | 3.0 |
| | Other monomer | | Butadiene | Butadiene | Butadiene | Butadiene | Butadiene |
| | | | 31.0 | 31.0 | 31.0 | 31.0 | 31.0 |
| | Total | | 100.0 | 100.0 | 100.0 | 100.0 | 100.0 |
| Shell portion | Monofunctional unsaturated carboxylic acid ester monomer | | Ethyl acrylate | Ethyl acrylate | Ethyl acrylate | Ethyl acrylate | Ethyl acrylate |
| | | | 30.0 | 35.0 | 35.0 | 35.0 | 35.0 |
| | | | Butyl acrylate | Butyl acrylate | Butyl acrylate | Butyl acrylate | Butyl acrylate |
| | | | 20.9 | 34.0 | 34.0 | 34.0 | 34.0 |
| | Total | | 50.9 | 69.0 | 69.0 | 69.0 | 69.0 |
| | Monofunctional unsaturated carboxylic acid and/or sulfonic acid monomer | | Methacrylic acid | Methacrylic acid | Methacrylic acid | Methacrylic acid | Methacrylic acid |
| | | | 49.0 | 30.0 | 30.0 | 30.0 | 30.0 |
| | Monomer including at least two vinyl functional groups | | Ethylene glycol dimethacrylate | Ethylene glycol dimethacrylate | Ethylene glycol dimethacrylate | Ethylene glycol dimethacrylate | Ethylene glycol dimethacrylate |
| | | | 0.1 | 1.0 | 1.0 | 1.0 | 1.0 |
| | Aromatic vinyl monomer | | - | - | - | - | - |
| | | | - | - | - | - | - |
| Number of moles of monofunctional unsaturated carboxylic acid and/or sulfonic acid monomer per 1 mol of monomer including at least two vinyl functional groups | | | 1,128.6 | 69.1 | 69.1 | 69.1 | 69.1 |
| Amount of THF-insoluble content in core portion polymer | | | 85 | 40 | 97 | 85 | 85 |
| Weight-average molecular weight of shell portion | | | 9,500,000 | 2,000,000 | 2,000,000 | 2,000,000 | 2,000,000 |
| Amount of electrolyte solution-insoluble content in binder composition | | | 80 | 80 | 80 | 80 | 80 |
| Viscosity ratio of binder composition before and after neutralization | | | 50 times | 3 times | 3 times | 1.6 times | 1.7 times |
| Core portion mass/Shell portion mass | | | 70/30 | 70/30 | 70/30 | 95/5 | 90/10 |
| Radius of gyration of core-shell particles | | | 950 nm | 200 nm | 200 nm | 60 nm | 80 nm |
| Functional particles in slurry | | | Graphite | Graphite | Graphite | Graphite | Graphite |
| Thickener in slurry | | | CMC | CMC | CMC | CMC | CMC |
| Binder composition | | | Example 11 | Example 12 | Example 13 | Example 14 | Example 15 |
| Functional layer | | | Negative electrode | Negative electrode | Negative electrode | Negative electrode | Negative electrode |
| Evaluation | Foaming of slurry composition | | A | A | A | A | A |
| | Peel strength of electrode or separator coating layer | | A | B | B | B | B |
| | Cycle characteristics | | B | A | A | A | A |
| | Peel strength after cycle characteristics test | | A | B | B | B | A |
| | Lithium metal deposition test | | B | A | A | A | A |

* Number under each monomer indicates charged amount (parts)

Table 1
(contd.)

| | | Example 16 | Example 17 | Example 18 | Example 19 | Example 20 |
|---|---|---|---|---|---|---|
| Core portion | Unsaturated carboxylic acid ester monomer | Methyl methacrylate | Methyl methacrylate | Methyl methacrylate | Methyl methacrylate | Methyl methacrylate |
| | | 33.0 | 33.0 | 33.0 | 33.0 | 33.0 |
| | | Butyl acrylate | Butyl acrylate | Butyl acrylate | Butyl acrylate | Butyl acrylate |
| | | 33.0 | 33.0 | 33.0 | 33.0 | 33.0 |
| | Unsaturated carboxylic acid monomer | Methacrylic acid | Methacrylic acid | Methacrylic acid | Methacrylic acid | Methacrylic acid |
| | | 3.0 | 3.0 | 3.0 | 3.0 | 3.0 |
| | Other monomer | Butadiene | Butadiene | Butadiene | Butadiene | Butadiene |
| | | 31.0 | 31.0 | 31.0 | 31.0 | 31.0 |
| | Total | 100.0 | 100.0 | 100.0 | 100.0 | 100.0 |
| Shell portion | Monofunctional unsaturated carboxylic acid ester monomer | Ethyl acrylate | Ethyl acrylate | Ethyl acrylate | Ethyl acrylate | Ethyl acrylate |
| | | 35.0 | 35.0 | 35.0 | 35.0 | 35.0 |
| | | Butyl acrylate | Butyl acrylate | Butyl acrylate | Butyl acrylate | Butyl acrylate |
| | | 34.0 | 34.0 | 34.0 | 34.0 | 34.0 |
| | Total | 69.0 | 69.0 | 69.0 | 69.0 | 69.0 |
| | Monofunctional unsaturated carboxylic acid and/or sulfonic acid monomer | Methacrylic acid | Methacrylic acid | Methacrylic acid | Methacrylic acid | Methacrylic acid |
| | | 30.0 | 30.0 | 30.0 | 30.0 | 30.0 |
| | Monomer including at least two vinyl functional groups | Ethylene glycol dimethacrylate | Ethylene glycol dimethacrylate | Ethylene glycol dimethacrylate | Ethylene glycol dimethacrylate | Ethylene glycol dimethacrylate |
| | | 1.0 | 1.0 | 1.0 | 1.0 | 1.0 |
| | Aromatic vinyl monomer | - | - | - | - | - |
| | | - | - | - | - | - |
| Number of moles of monofunctional unsaturated carboxylic acid and/or sulfonic acid monomer per 1 mol of monomer including at least two vinyl functional groups | | 69.1 | 69.1 | 69.1 | 69.1 | 69.1 |
| Amount of THF-insoluble content in core portion polymer | | 85 | 85 | 85 | 85 | 85 |
| Weight-average molecular weight of shell portion | | 2,000,000 | 2,000,000 | 2,000,000 | 2,000,000 | 2,000,000 |
| Amount of electrolyte solution-insoluble content in binder composition | | 80 | 80 | 80 | 80 | 80 |
| Viscosity ratio of binder composition before and after neutralization | | 10 times | 15 times | 3 times | 3 times | 3 times |
| Core portion mass/Shell portion mass | | 10/90 | 5/95 | 70/30 | 70/30 | 70/30 |
| Radius of gyration of core-shell particles | | 700 nm | 800 nm | 200 nm | 200 nm | 200 nm |
| Functional particles in slurry | | Graphite | Graphite | Graphite | Graphite | Graphite |
| Thickener in slurry | | CMC | CMC | CMC | CMC | CMC |
| Binder composition | | Example 16 | Example 17 | SBR/Example 1 = 95/5 | SBR/Example 1 = 50/50 | SBR/Example 1 = 25/75 |
| Functional layer | | Negative electrode | Negative electrode | Negative electrode | Negative electrode | Negative electrode |
| Evaluation | Foaming of slurry composition | A | A | A | A | A |
| | Peel strength of electrode or separator coating layer | A | A | B | B | B |
| | Cycle characteristics | A | B | B | A | A |
| | Peel strength after cycle characteristics test | A | A | B | B | A |
| | Lithium metal deposition test | B | B | B | A | B |

* Number under each monomer indicates charged amount (parts)

Table 1
(contd.)

| | | | Example 21 | Example 22 | Example 23 | Example 24 | Example 25 |
|---|---|---|---|---|---|---|---|
| Core portion | Unsaturated carboxylic acid ester monomer | | Methyl methacrylate | Methyl methacrylate | - | - | Methyl methacrylate |
| | | | 33.0 | 33.0 | - | - | 33.0 |
| | | | Butyl acrylate | Butyl acrylate | - | - | Butyl acrylate |
| | | | 33.0 | 33.0 | - | - | 33.0 |
| | Unsaturated carboxylic acid monomer | | Methacrylic acid | Methacrylic acid | - | - | Methacrylic acid |
| | | | 3.0 | 3.0 | - | - | 3.0 |
| | Other monomer | | Butadiene | Butadiene | - | - | Butadiene |
| | | | 31.0 | 31.0 | - | - | 31.0 |
| | Total | | 100.0 | 100.0 | 100.0 (SBR) | 100.0 (SBS) | 100.0 |
| Shell portion | Monofunctional unsaturated carboxylic acid ester monomer | | Ethyl acrylate | Ethyl acrylate | Ethyl acrylate | Ethyl acrylate | Ethyl acrylate |
| | | | 35.0 | 35.0 | 35.0 | 35.0 | 35.0 |
| | | | Butyl acrylate | Butyl acrylate | Butyl acrylate | Butyl acrylate | Butyl acrylate |
| | | | 34.0 | 34.0 | 34.0 | 34.0 | 34.0 |
| | Total | | 69.0 | 69.0 | 69.0 | 69.0 | 69.0 |
| | Monofunctional unsaturated carboxylic acid and/or sulfonic acid monomer | | Methacrylic acid | Methacrylic acid | Methacrylic acid | Methacrylic acid | Methacrylic acid |
| | | | 30.0 | 30.0 | 30.0 | 30.0 | 30.0 |
| | Monomer including at least two vinyl functional groups | | Ethylene glycol dimethacrylate | Ethylene glycol dimethacrylate | Ethylene glycol dimethacrylate | Ethylene glycol dimethacrylate | Ethylene glycol dimethacrylate |
| | | | 1.0 | 1.0 | 1.0 | 1.0 | 1.0 |
| | Aromatic vinyl monomer | | - | - | - | - | - |
| | | | - | - | - | - | - |
| Number of moles of monofunctional unsaturated carboxylic acid and/or sulfonic acid monomer per 1 mol of monomer including at least two vinyl functional groups | | | 69.1 | 69.1 | 69.1 | 69.1 | 69.1 |
| Amount of THF-insoluble content in core portion polymer | | | 85 | 85 | 85 | 85 | 85 |
| Weight-average molecular weight of shell portion | | | 2,000,000 | 2,000,000 | 2,000,000 | 2,000,000 | 2,000,000 |
| Amount of electrolyte solution-insoluble content in binder composition | | | 80 | 80 | 80 | 80 | 80 |
| Viscosity ratio of binder composition before and after neutralization | | | 3 times | 3 times | 3 times | 3 times | 3 times |
| Core portion mass/Shell portion mass | | | 70/30 | 70/30 | 70/30 | 70/30 | 70/30 |
| Radius of gyration of core-shell particles | | | 200 nm | 200 nm | 200 nm | 200 nm | 200 nm |
| Functional particles in slurry | | | Graphite | Graphite | Graphite | Graphite | Graphite/Silicon |
| Thickener in slurry | | | CMC | Acrylic acid/ Acrylamide/ Hydroxyethyl acrylamide Lithium salt | CMC | CMC | Acrylic acid/ Acrylamide/ Hydroxyethyl acrylamide Lithium salt |
| Binder composition | | | SBS/Example 1 = 85/15 | Example 1 | Example 23 | Example 24 | Example 1 |
| Functional layer | | | Negative electrode | Negative electrode | Negative electrode | Negative electrode | Negative electrode |
| Evaluation | Foaming of slurry composition | | A | A | A | A | A |
| | Peel strength of electrode or separator coating layer | | B | B | A | A | A |
| | Cycle characteristics | | A | A | A | A | A |
| | Peel strength after cycle characteristics test | | A | A | A | A | B |
| | Lithium metal deposition test | | A | A | B | B | A |

* Number under each monomer indicates charged amount (parts)

Table 1
(contd.)

| | | Example 26 | Example 27 | Example 28 | Comparative Example 1 | Comparative Example 2 |
|---|---|---|---|---|---|---|
| Core portion | Unsaturated carboxylic acid ester monomer | Methyl methacrylate | Methyl methacrylate | Methyl methacrylate | Methyl methacrylate | Methyl methacrylate |
| | | 33.0 | 33.0 | 33.0 | 33.0 | 33.0 |
| | | Butyl acrylate | Butyl acrylate | Butyl acrylate | Butyl acrylate | Butyl acrylate |
| | | 33.0 | 33.0 | 33.0 | 33.0 | 33.0 |
| | Unsaturated carboxylic acid monomer | Methacrylic acid | Methacrylic acid | Methacrylic acid | Methacrylic acid | Methacrylic acid |
| | | 3.0 | 3.0 | 3.0 | 3.0 | 3.0 |
| | Other monomer | Butadiene | Butadiene | Butadiene | Butadiene | Butadiene |
| | | 31.0 | 31.0 | 31.0 | 31.0 | 31.0 |
| | Total | 100.0 | 100.0 | 100.0 | 100.0 | 100.0 |
| Shell portion | Monofunctional unsaturated carboxylic acid ester monomer | Methyl methacrylate | Ethyl acrylate | Ethyl acrylate | Ethyl acrylate | Ethyl acrylate |
| | | 35.0 | 35.0 | 35.0 | 46.0 | 20.0 |
| | | Butyl acrylate | Butyl acrylate | Butyl acrylate | Butyl acrylate | Butyl acrylate |
| | | 34.0 | 34.0 | 34.0 | 45.0 | 24.0 |
| | Total | 69.0 | 69.0 | 69.0 | 91.0 | 44.0 |
| | Monofunctional unsaturated carboxylic acid and/or sulfonic acid monomer | Methacrylic acid | Methacrylic acid | Methacrylic acid | Methacrylic acid | Methacrylic acid |
| | | 30.0 | 30.0 | 30.0 | 8.0 | 55.0 |
| | Monomer including at least two vinyl functional groups | Ethylene glycol dimethacrylate | Ethylene glycol dimethacrylate | Ethylene glycol dimethacrylate | Ethylene glycol dimethacrylate | Ethylene glycol dimethacrylate |
| | | 1.0 | 1.0 | 1.0 | 1.0 | 1.0 |
| | Aromatic vinyl monomer | - | - | - | - | - |
| | | - | - | - | - | - |
| Number of moles of monofunctional unsaturated carboxylic acid and/or sulfonic acid monomer per 1 mol of monomer including at least two vinyl functional groups | | 69.1 | 69.1 | 69.1 | 18.4 | 126.7 |
| Amount of THF-insoluble content in core portion polymer | | 85 | 85 | 85 | 85 | 85 |
| Weight-average molecular weight of shell portion | | 2,000,000 | 2,000,000 | 2,000,000 | 2,000,000 | 2,000,000 |
| Amount of electrolyte solution-insoluble content in binder composition | | 80 | 80 | 80 | 80 | 80 |
| Viscosity ratio of binder composition before and after neutralization | | 3 times | 3 times | 3 times | 1.1 times | 3 times |
| Core portion mass/Shell portion mass | | 70/30 | 70/30 | 70/30 | 70/30 | 70/30 |
| Radius of gyration of core-shell particles | | 200 nm | 200 nm | 200 nm | | |
| Functional particles in slurry | | Graphite | | Olivine iron | Graphite | Graphite |
| Thickener in slurry | | CMC | | CMC | CMC | CMC |
| Binder composition | | Example 26 | Example 1 | Example 1 | Comparative Example 1 | Comparative Example 2 |
| Functional layer | | Negative electrode | Functional layer (separator) | Positive electrode | Negative electrode | Negative electrode |
| Evaluation | Foaming of slurry composition | B | A | A | B | D |
| | Peel strength of electrode or separator coating layer | A | A | A | D | B |
| | Cycle characteristics | A | A | A | B | C |
| | Peel strength after cycle characteristics test | A | A | A | D | B |
| | Lithium metal deposition test | A | A | A | C | C |

* Number under each monomer indicates charged amount (parts)

Table 1
(contd.)

| | | | Comparative Example 3 | Comparative Example 4 | Comparative Example 5 | Comparative Example 6 | Comparative Example 7 |
|---|---|---|---|---|---|---|---|
| Core portion | Unsaturated carboxylic acid ester monomer | | - | Methyl methacrylate | Methyl methacrylate | Methyl methacrylate | Methyl methacrylate |
| | | | - | 33.0 | 33.0 | 33.0 | 33.0 |
| | | | - | Butyl acrylate | Butyl acrylate | Butyl acrylate | Butyl acrylate |
| | | | - | 33.0 | 33.0 | 33.0 | 33.0 |
| | Unsaturated carboxylic acid monomer | | - | Methacrylic acid | Methacrylic acid | Methacrylic acid | Methacrylic acid |
| | | | - | 3.0 | 3.0 | 3.0 | 3.0 |
| | Other monomer | | Styrene/ Butadiene/ Cyanide 50/45/5 | Butadiene | Butadiene | Butadiene | Butadiene |
| | | | 100.0 | 31.0 | 31.0 | 31.0 | 31.0 |
| | Total | | 100.0 | 100.0 | 100.0 | 100.0 | 100.0 |
| Shell portion | Monofunctional unsaturated carboxylic acid ester monomer | | Methyl methacrylate | Ethyl acrylate | Ethyl acrylate | Ethyl acrylate | Ethyl acrylate |
| | | | 50.0 | 35.0 | 27.0 | 28.0 | 35.0 |
| | | | Butyl acrylate | Butyl acrylate | Butyl acrylate | Butyl acrylate | Butyl acrylate |
| | | | 25.0 | 35.0 | 28.0 | 26.0 | 40.0 |
| | Total | | 75.0 | 70.0 | 55.0 | 54.0 | 75.0 |
| | Monofunctional unsaturated carboxylic acid and/or sulfonic acid monomer | | Methacrylic acid | Methacrylic acid | Methacrylic acid | Methacrylic acid | Styrene sulfonic acid |
| | | | 23.0 | 30.0 | 30.0 | 30.0 | 5.0 |
| | Monomer including at least two vinyl functional groups | | - | - | Ethylene glycol dimethacrylate | Ethylene glycol dimethacrylate | Butadiene |
| | | | - | - | 15.0 | 1.0 | 20.0 |
| | Aromatic vinyl monomer | | Styrene | - | - | Styrene | - |
| | | | 2.0 | - | - | 15.0 | - |
| Number of moles of monofunctional unsaturated carboxylic acid and/or sulfonic acid monomer per 1 mol of monomer including at least two vinyl functional groups | | | - | - | 4.6 | 69.1 | 0.1 |
| Amount of THF-insoluble content in core portion polymer | | | 85 | 85 | 85 | 85 | 85 |
| Weight-average molecular weight of shell portion | | | 2,000,000 | 2,000,000 | 2,000,000 | 2,000,000 | 200,000 |
| Amount of electrolyte solution-insoluble content in binder composition | | | 35 | 25 | 99 | 80 | 95 |
| Viscosity ratio of binder composition before and after neutralization | | | 1.5 | 3 times | 3 times | 1.2 times | 1.6 times |
| Core portion mass/Shell portion mass | | | 80/20 | 70/30 | 70/30 | 70/30 | 70/30 |
| Radius of gyration of core-shell particles | | | | | | | 50 nm |
| Functional particles in slurry | | | Graphite | Graphite | Graphite | Graphite | Graphite |
| Thickener in slurry | | | CMC | CMC | CMC | CMC | CMC |
| Binder composition | | | Comparative Example 3 | Comparative Example 4 | Comparative Example 5 | Comparative Example 6 | Comparative Example 7 |
| Functional layer | | | Negative electrode | Negative electrode | Negative electrode | Negative electrode | Negative electrode |
| Evaluation | Foaming of slurry composition | | B | B | A | D | A |
| | Peel strength of electrode or separator coating layer | | D | D | D | D | D |
| | Cycle characteristics | | C | C | B | B | D |
| | Peel strength after cycle characteristics test | | D | D | D | D | D |
| | Lithium metal deposition test | | D | D | D | D | C |

* Number under each monomer indicates charged amount (parts)

Table 1
(contd.)

| | | | Comparative Example 8 | Comparative Example 9 | Comparative Example 10 | Comparative Example 11 | Comparative Example 12 |
|---|---|---|---|---|---|---|---|
| Core portion | Unsaturated carboxylic acid ester monomer | | Methyl methacrylate | Methyl methacrylate | Methyl methacrylate | Methyl methacrylate | Methyl methacrylate |
| | | | 33.0 | 33.0 | 33.0 | 33.0 | 33.0 |
| | | | Butyl acrylate | Butyl acrylate | Butyl acrylate | Butyl acrylate | Butyl acrylate |
| | | | 33.0 | 33.0 | 33.0 | 33.0 | 33.0 |
| | Unsaturated carboxylic acid monomer | | Methacrylic acid | Methacrylic acid | Methacrylic acid | Methacrylic acid | Methacrylic acid |
| | | | 3.0 | 3.0 | 3.0 | 3.0 | 3.0 |
| | Other monomer | | Butadiene | Butadiene | Butadiene | Butadiene | Butadiene |
| | | | 31.0 | 31.0 | 31.0 | 31.0 | 31.0 |
| | Total | | 100.0 | 100.0 | 100.0 | 100.0 | 100.0 |
| Shell portion | Monofunctional unsaturated carboxylic acid ester monomer | | Ethyl acrylate | Methyl methacrylate | Methyl methacrylate | Ethyl acrylate | Ethyl acrylate |
| | | | 30.0 | 50.0 | 50.0 | 30.0 | 30.0 |
| | | | Butyl acrylate | Butyl acrylate | Butyl acrylate | Butyl acrylate | Butyl acrylate |
| | | | 20.0 | 27.0 | 27.0 | 30.0 | 20.0 |
| | Total | | 50.0 | 77.0 | 77.0 | 60.0 | 50.0 |
| | Monofunctional unsaturated carboxylic acid and/or sulfonic acid monomer | | Acrylic acid | Methacrylic acid | Methacrylic acid | Methacrylic acid | Methacrylic acid |
| | | | 49.95 | 23.0 | 23.0 | 20.0 | 50.0 |
| | Monomer including at least two vinyl functional groups | | Ethoxylated pentaerythritol tetraacrylate | - | - | Ethylene glycol dimethacrylate | - |
| | | | 0.05 | - | - | 20.0 | - |
| | Aromatic vinyl monomer | | - | - | - | - | - |
| | | | - | - | - | - | - |
| Number of moles of monofunctional unsaturated carboxylic acid and/or sulfonic acid monomer per 1 mol of monomer including at least two vinyl functional groups | | | 26,229.6 | - | - | 2.3 | - |
| Amount of THF-insoluble content in core portion polymer | | | 85 | 85 | 85 | 85 | 85 |
| Weight-average molecular weight of shell portion | | | 8,500,000 | 2,000,000 | 2,000,000 | 5,000 | 12,000,000 |
| Amount of electrolyte solution-insoluble content in binder composition | | | 50 | 80 | 80 | 80 | 80 |
| Viscosity ratio of binder composition before and after neutralization | | | 7 times | 3 times | 3 times | 1.1 times | 50 times |
| Core portion mass/Shell portion mass | | | 70/30 | 99/1 | 1/99 | 70/30 | 70/30 |
| Radius of gyration of core-shell particles | | | 850 nm | | | 5 nm | 1500 nm |
| Functional particles in slurry | | | Graphite | Graphite | Graphite | Graphite | Graphite |
| Thickener in slurry | | | CMC | CMC | CMC | CMC | CMC |
| Binder composition | | | Comparative Example 8 | Comparative Example 9 | Comparative Example 10 | Comparative Example 11 | Comparative Example 12 |
| Functional layer | | | Negative electrode | Negative electrode | Negative electrode | Negative electrode | Negative electrode |
| Evaluation | Foaming of slurry composition | | A | A | D | D | B |
| | Peel strength of electrode or separator coating layer | | D | D | C | D | C |
| | Cycle characteristics | | C | B | C | C | C |
| | Peel strength after cycle characteristics test | | D | D | C | D | C |
| | Lithium metal deposition test | | D | C | C | C | D |

\* Number under each monomer indicates charged amount (parts)

INDUSTRIAL APPLICABILITY

According to the present disclosure, a binder composition for a secondary battery is provided together with a slurry composition for a secondary battery, a functional layer for a secondary battery, a separator for a secondary battery, an electrode for a secondary battery, and a secondary battery. Moreover, according to the present disclosure, it is possible to obtain excellent close adherence between a substrate and a layer formed using the binder composition in production of a separator, electrode, or the like of a secondary battery and also to obtain a secondary battery having good cycle characteristics. Furthermore, reduction of close adherence can be inhibited even after repeated charge/discharge cycling, and deposition of lithium metal can be significantly inhibited in the case of a lithium ion secondary battery.

**Claims**

1.  A binder composition for a secondary battery comprising a polymer and a solvent, wherein

    the polymer is core-shell particles including a core portion formed of a polymer (a1) and a shell portion formed of a polymer (a2),
    the polymer (a2) includes: not less than 50.0 mass% and not more than 89.9 mass% of a monofunctional unsaturated carboxylic acid ester monomer unit; not less than 10.0 mass% and not more than 49.9 mass% of at least one type of monomer unit selected from a monofunctional unsaturated carboxylic acid monomer unit and a monofunctional unsaturated sulfonic acid monomer unit; not less than 0.1 mass% and not more than 10.0 mass% of a monomer unit of a monomer including at least two vinyl functional groups; and 5.0 mass% or less of an aromatic vinyl monomer unit, and
    the at least one type of monomer unit selected from a monofunctional unsaturated carboxylic acid monomer unit and a monofunctional unsaturated sulfonic acid monomer unit is not less than 0.1 mol and not more than 15,000 mol relative to 1 mol of the monomer unit of the monomer including at least two vinyl functional groups.

2.  The binder composition for a secondary battery according to claim 1, wherein an amount of tetrahydrofuran-insoluble content in the polymer (a1) is not less than 40% and not more than 97%.

3.  The binder composition for a secondary battery according to claim 1 or 2, wherein a ratio of mass of the polymer (a1) relative to mass of the polymer (a2) is not more than 95/5 and not less than 5/95.

4.  The binder composition for a secondary battery according to any one of claims 1 to 3, wherein the core-shell particles have a radius of gyration of not less than 10 nm and not more than 1,000 nm.

5.  A slurry composition for a secondary battery comprising the binder composition for a secondary battery according to any one of claims 1 to 4.

6.  The slurry composition for a secondary battery according to claim 5, further comprising non-conductive particles.

7.  The slurry composition for a secondary battery according to claim 5, further comprising electrode active material particles.

8.  A functional layer for a secondary battery formed using the slurry composition for a secondary battery according to any one of claims 5 to 7.

9.  A separator for a secondary battery comprising a functional layer for a secondary battery formed on a separator substrate using the slurry composition for a secondary battery according to claim 6.

10. An electrode for a secondary battery comprising a functional layer for a secondary battery formed on a current collector using the slurry composition for a secondary battery according to claim 7.

11. A secondary battery comprising the functional layer for a secondary battery according to claim 8.

12. A secondary battery comprising the separator for a secondary battery according to claim 9.

13. A secondary battery comprising the electrode for a secondary battery according to claim 10.

## INTERNATIONAL SEARCH REPORT

| | International application No. |
|---|---|
| | PCT/JP2021/003996 |

**A. CLASSIFICATION OF SUBJECT MATTER**
Int.Cl. C08F265/04(2006.01)i, H01M4/13(2010.01)i, H01M4/62(2006.01)i, H01M50/409(2021.01)i
FI: H01M4/62Z, H01M2/16L, H01M4/13, C08F265/04
According to International Patent Classification (IPC) or to both national classification and IPC

**B. FIELDS SEARCHED**

Minimum documentation searched (classification system followed by classification symbols)
Int.Cl. C08F265/04, H01M4/13, H01M4/62, H01M50/409

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/096975 A1 (ZEON CORPORATION) 31 May 2018 (2018-05-31), paragraphs [0044], [0064], examples, claims | 1, 3-6, 8-9, 11-12 |
| Y | | 2 |
| A | | 7, 10, 13 |
| Y | WO 2020/022343 A1 (ZEON CORPORATION) 30 January 2020 (2020-01-30), paragraph [0047], examples, claims | 2 |
| A | WO 2020/004332 A1 (ZEON CORPORATION) 02 January 2020 (2020-01-02), entire text | 1-13 |
| A | WO 2017/110901 A1 (OSAKA SODA CO., LTD.) 29 June 2017 (2017-06-29), entire text | 1-13 |
| A | WO 2012/169094 A1 (JSR CORPORATION) 13 December 2012 (2012-12-13), example 14 | 1-13 |

☐ Further documents are listed in the continuation of Box C.　　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 April 2021 | 27 April 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

| INTERNATIONAL SEARCH REPORT | International application No. |
|---|---|
| Information on patent family members | PCT/JP2021/003996 |

| | | |
|---|---|---|
| WO 2018/096975 A1 | 31 May 2018 | US 2019/0319236 A1<br>paragraphs [0069], [0101],<br>examples, claims<br>EP 3547399 A1<br>CN 109983599 A<br>KR 10-2019-0077409 A |
| WO 2020/022343 A1 | 30 January 2020 | (Family: none) |
| WO 2020/004332 A1 | 02 January 2020 | (Family: none) |
| WO 2017/110901 A1 | 29 June 2017 | US 2018/0366731 A1<br>whole document<br>EP 3396749 A1<br>CN 108292755 A<br>KR 10-2018-0090275 A<br>TW 201735425 A |
| WO 2012/169094 A1 | 13 December 2012 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016039067 A1
- JP 2015201444 A
- JP 2006513554 A
- JP 2013073921 A
- JP H6302797 A
- WO 2017110901 A1
- WO 2017188055 A1
- WO 2018043200 A1
- JP H11025989 A
- JP 2013182765 A
- JP 6520720 B